# EUROPEAN PATENT APPLICATION

(11) **EP 2 416 059 A1**
(43) Date of publication of application: **08.02.2012**
(21) Application number: 10774766.9
(22) Date of filing: 23.02.2010
(51) Int. Cl.: F21S 2/00, F21V 3/00, G02B 5/00, G02F 1/13357, G09F 9/00, F21Y 103/00

(54) **LIGHTING DEVICE, DISPLAY DEVICE, AND TELEVISION RECEIVER**

(30) Priority: 15.05.2009 JP 2009119081
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/052722
(87) International publication number: WO 2010/131507

(57) **Abstract**

An object of the present invention is to reduce uneven brightness. A backlight unit 12 of the present invention includes a hot cathode tube 17, a chassis 14, a diffuser plate 30, and a lamp clip 20. The hot cathode tube 17 is a linearly formed light source. The chassis 14 houses the hot cathode tube 17 and has an opening 14b for light from the light source to pass through. The diffuser plate 30 is an optical member 15 is arranged so as to face the hot cathode tube 17 and to cover the opening 14b. The lamp clip 20 is a light-source holding member holding a luminous portion LP of the hot cathode tube 17. An area of the diffuser plate 30 overlapping the lamp clip 20 (a light-source holding member overlapping area) includes a low-light-reflectance area LR having light reflectance relatively at at least first surface 30a facing the hot cathode tube 17 smaller than that of a peripheral area ALR.

## Description

### TECHNICAL FIELD

The present invention relates to a lighting device, a display device and a television receiver.

### BACKGROUND ART

A liquid crystal panel included in a liquid crystal display device does not emit light, and thus a backlight device is required as a separate lighting device. The backlight device is arranged behind the liquid crystal panel (i.e., on a side opposite from a display surface side). It includes a chassis having an opening on a liquid crystal panel side, a plurality of light sources (for example, cold cathode tubes) accommodated in the chassis as lamps, and an optical member (a diffuser plate and the like) provided at the opening of the chassis for efficiently directing light emitted from the light sources to a liquid crystal panel. A backlight device disclosed in Patent Document 1 has been known as a backlight device having the above configurations.

[Patent Document 1] Japanese Unexamined Patent Publication No. 2006-114445

### Problem to be Solved by the Invention

In the backlight device having the above configurations, a part of a luminance portion of a linearly formed light source is held by a lamp clip. Light emitted from the held part is blocked by the lamp clip. The amount of light traveling from the part held by the lamp clip toward the optical member tends to be smaller in comparison to other parts that are not held by the lamp clip. Therefore, the amount of light from the linearly formed light source is locally reduced in a specific area of the optical member corresponding to the lamp clip. As a result, the amount of light passing therethrough tends to be small and a dark area is likely to be created.

### DISCLOSURE OF THE PRESENT INVENTION

The present invention was made in view of the foregoing circumstances. An object of the present invention is to reduce uneven brightness.

### Means for Solving the Problem

To solve the above problem, a lighting device of the present invention includes a linearly formed light source, a chassis, an optical member, and a light-source holding member. The chassis houses the light source and having an opening for light from the light source to pass through. The optical member is provided so as to face the light source and to cover the opening. The light-source holding member holds a luminous portion of the linearly formed light source. The optical member has an area overlapping the light-source holding member. The overlapping area includes a low-light-reflectance area, the light reflectance of which at at least a surface facing the linearly formed light source is relatively lower than a peripheral area.

The luminous portion of the linearly formed light source housed in the chassis is held by the light-source holding member. With this configuration, the linearly formed light source is less likely to be deformed or curved. Some rays of light exiting from a part of the luminous portion of the linearly formed light source held by the light-source holding member are blocked by the light-source holding member. Namely, an amount of light exiting from that part and travel toward the optical member tends to be smaller than an amount of light exiting from the other parts. According to the present invention, the optical member has the area overlapping the light-source holding member including the low-light-reflectance area, the light reflectance of which at at least a surface facing the linearly formed light source is relatively lower than a peripheral area. Therefore, even when the amount of light traveling toward the low-light-reflectance area is smaller than the peripheral area due to the light-source holding member, a difference in an amount of light passing through the low-light-reflectance area and in an amount of light passing through the peripheral area is less likely to be produced. As a result, a distribution of intensity of light exiting from the optical member can be evened.

Preferred embodiments of the present invention may be configured as follows.
(1) The chassis has a part facing the optical member. The part includes a light-source installed area in which the linearly formed light source is arranged and a light-source non-installed area in which the linearly formed light source is not arranged. In this embodiment, the chassis has the light-source non-installed area in which the linearly formed light source is not arranged.
   In comparison to a configuration in which linearly formed light sources are evenly arranged in an entire area of the chassis, the number of the linearly formed light source can be reduced. Therefore, a cost and a power consumption of the lighting device can be reduced.

(2) The part of the chassis includes at least a first edge area, a second edge area, and a middle area. The second edge area is located at an edge portion opposite from the first edge area. The middle area is located between the first edge area and the second edge area. The middle area is the light-source installed area. Each of the first edge area and the second edge area is the light-source non-installed area. With this configuration, a sufficient level of brightness can be achieved in a middle area of the lighting device. Therefore, a display device including the lighting device can also have a sufficient level of brightness at in a middle area of a display screen. Therefore, good visibility can be achieved.

(3) The optical member has a part that overlaps the light-source installed area and a part that overlaps the light-source non-installed area, both having surfaces facing the linearly formed light source. The part that overlaps the light-source installed area excluding the low-light-reflectance area has light reflectance at at least the surface thereof higher than light reflectance at at least the surface of the part that overlaps the light-source non-installed area. With this configuration, rays of light emitted from the linearly formed light source first reach the part of the optical member having relatively high light reflectance and thus many of them are reflected (i.e., do not pass therethrough). As a result, the intensity of the light is low for the amount of light emitted from the linearly formed light source. The reflected rays of light are further reflected inside the chassis and can be directed to the light-source non-installed area. The part of the optical member overlapping the light-source non-installed area has the relatively low light reflectance, and more rays of light pass therethrough. Therefore, a predetermined intensity of light can be achieved.

(4) The light reflectance at at least the surface of the part of the optical member facing the linearly formed light source decreases as a distance from the linearly formed light source increases except in the low-light-reflectance area. With this configuration, the intensity of light in the light-source installed area and the light-source non-installed area can be equalized.

(5) The lighting device further includes a light reflector configured to reflect light and formed on a surface of the optical member facing the linearly formed light source. With this configuration, the light reflectance at the surface of the optical member on the linearly-formed-light-source side can be adjusted according to the configuration of the light reflector.

(6) The light reflector is provided in areas of the optical member other than the low-light-reflectance area. With this configuration, a sufficient amount of light passing through the low-light-reflectance area can be achieved. Therefore, a difference in the amount of light passing through the low-light-reflectance area and the amount of light passing through the peripheral area can be properly compensated. Furthermore, the sufficient amount of light is passing through the low-light-reflectance area. Therefore, the light-source holding member with a surface having low light reflectance can be used and a cost of manufacturing the light-source holding member can be reduced.

(7) The light reflector is provided in the low-light-reflectance area in addition to the areas of the optical member other than the low-light-reflectance area. With this configuration, a difference in the amount of light passing through the low-light-reflectance area and the amount of light passing through the peripheral area can be properly compensated according to the configuration of the light reflector provided in the low-light-reflectance area.

(8) The light reflector includes a large number of dots having light reflectivity. Each dot has a point-like shape when viewed in plane of the surface of the optical member on the linearly-formed-light-source side. With this configuration, the light reflectance can be easily adjusted according to the configurations of the dots (e.g., areas, distribution density).

(9) The light-source holding member includes a main body extending along the chassis, and a light-source gripper projecting from the main body on the linearly-formed-light-source side and holding the linearly formed light source. The light-source holding member can be stably mounted to the chassis with the main body extending along the chassis. The linearly formed light source is properly held by the light-source holding gripper projecting from the main body to the linearly-formed-light-source side.

(10) The low-light-reflectance area includes the area of the optical member overlapping the light-source holding gripper. In the area of the optical member overlapping the light-source gripper that projects from the main body to the linearly-formed-light-source side and are directly in contact with the luminous portion of the linearly formed light source among the area of the optical member overlapping the light-source holding member, light from the luminous portion is especially likely to be blocked. Therefore, the amount of light passing therethrough may decrease. By setting the area overlapping the light-source gripper as the low-light-reflectance area, the amount of light passing through the optical member can be further effectively equalized.

(11) The linearly formed light source includes a plurality of linearly formed light sources arranged inside the chassis. The light-source gripper is arranged on the main body along an arrangement direction of the linearly formed light sources. With this configuration, a plurality of the linearly formed light sources can be held by a single light-source holding member.

(12) The linearly formed light source includes a plurality of linearly formed light sources arranged inside the chassis. The light-source holding member includes a plurality of light-source holding members arranged along an arrangement direction of the linearly formed light sources inside the chassis. The low-light-reflectance area is formed in an area in which the plurality of the light-source holding member are arranged. In comparison to a configuration in which a low-light-reflectance area is formed independently and separately for each light-source holding member, the low-light-reflectance area can be easily formed in a process of manufacturing the optical member.

(13) The light-source holding member has a white surface. With this configuration, light can be well reflected by the surface of the light-source holding member. Therefore, the light emitted from the linearly formed light source can be effectively used.

(14) The linearly formed light source is a hot cathode tube. With this configuration, high brightness can be achieved.

(15) The linearly formed light source is a cold cathode tube. With this configuration, a long-life light source can be provided. Furthermore, the intensity of light can be easily adjusted.

Next, to solve the above problem, a display device of the present invention includes the lighting device described above and a display panel configured to provide display using light from the lighting device.

Because the lighting device configured to supply light to the display panel is less likely to produce uneven brightness, the display device can provide high quality display.

The display panel may be a liquid crystal display panel. The display device as a liquid crystal display device has a variety of applications, such as a television display or a personal-computer display. Particularly, it is suitable for a large screen display.

### Advantageous Effect of the Invention

According to the present invention, the uneven brightness can be reduced.

### BRIEF DESCRIPTION OF THE DRAWINGS

FIG. 1 is an exploded perspective view illustrating a general construction of a television receiver according to a first embodiment of the present invention;
FIG. 2 is an exploded perspective view illustrating a general construction of a liquid crystal display device provided in the television receiver;
FIG. 3 is a cross-sectional view of the liquid crystal display device along the short-side direction;
FIG. 4 is a cross-sectional view of the liquid crystal display device along the long-side direction;
FIG. 5 is a plan view illustrating locations of a hot cathode tube and a lamp clip relative to a chassis included in the liquid crystal display device;
FIG. 6 is a plan view illustrating a light reflectance distribution of a diffuser plate;
FIG. 7 is a magnified partial plan view of a relevant part of the diffuser plate illustrating a general configuration of a surface thereof opposite the hot cathode tube;
FIG. 8 is a graph illustrating a reflectance change with respect to a short-side direction of the diffuser plate along line viii-viii in FIG. 6;
FIG. 9 is a graph illustrating a reflectance change with respect to the short-side direction of the diffuser plate along line ix-ix in FIG. 6;
FIG. 10 is a graph illustrating a reflectance change with respect to a long-side direction of the diffuser plate along line x-x in FIG. 6;
FIG. 11 is a graph illustrating a reflectance change with respect to the long-side direction of the diffuser plate along line xi-xi in FIG. 6;
FIG. 12 is a magnified partial plan view of a relevant part of a diffuser plate illustrating a general configuration of a surface thereof opposite a hot cathode tube according to a first modification of the first embodiment;
FIG. 13 is a graph illustrating a reflectance change with respect to a short-side direction of the diffuser plate along line xiii-xiii in FIG. 12;
FIG. 14 is a graph illustrating a reflectance change with respect to a short-side direction of a diffuser plate according to a second modification of the first embodiment;
FIG. 15 is a graph illustrating a reflectance change with respect to a short-side direction of the diffuser plate including a low-light-reflectance area;
FIG. 16 is a graph illustrating a reflectance change with respect to a short-side direction of a diffuser plate according to a third modification of the first embodiment;
FIG. 17 is a graph illustrating a reflectance change with respect to a short-side direction of the diffuser plate including a low-light-reflectance area;
FIG. 18 is an exploded perspective view illustrating a general construction of a liquid crystal display device according to a second embodiment of the present invention;
FIG. 19 is a cross-sectional view of the liquid crystal display device along the short-side direction;
FIG. 20 is a cross-sectional view of the liquid crystal display device along the long-side direction;
FIG. 21 is a plan view illustrating locations of a hot cathode tube and a lamp clip relative to a chassis included in the liquid crystal display device;
FIG. 22 is a plan view illustrating a light reflectance distribution of a diffuser plate;
FIG. 23 is a magnified partial plan view of a relevant part of the diffuser plate illustrating a general configuration of a surface thereof opposite the hot cathode tube;
FIG. 24 is a graph illustrating a reflectance change with respect to a short-side direction of the diffuser plate along line xxiv-xxiv in FIG. 22;
FIG. 25 is a graph illustrating a reflectance change with respect to the short-side direction of the diffuser plate along line xxv-xxv in FIG. 22;
FIG. 26 is a graph illustrating a reflectance change with respect to a long-side direction of the diffuser plate along line xxvi-xxvi in FIG. 22; and
FIG. 27 is a graph illustrating a reflectance change with respect to the long-side direction of the diffuser plate along line xxvii-xsvii in FIG. 22.

### BEST MODE FOR CARRYING OUT THE INVENTION

### <First embodiment>

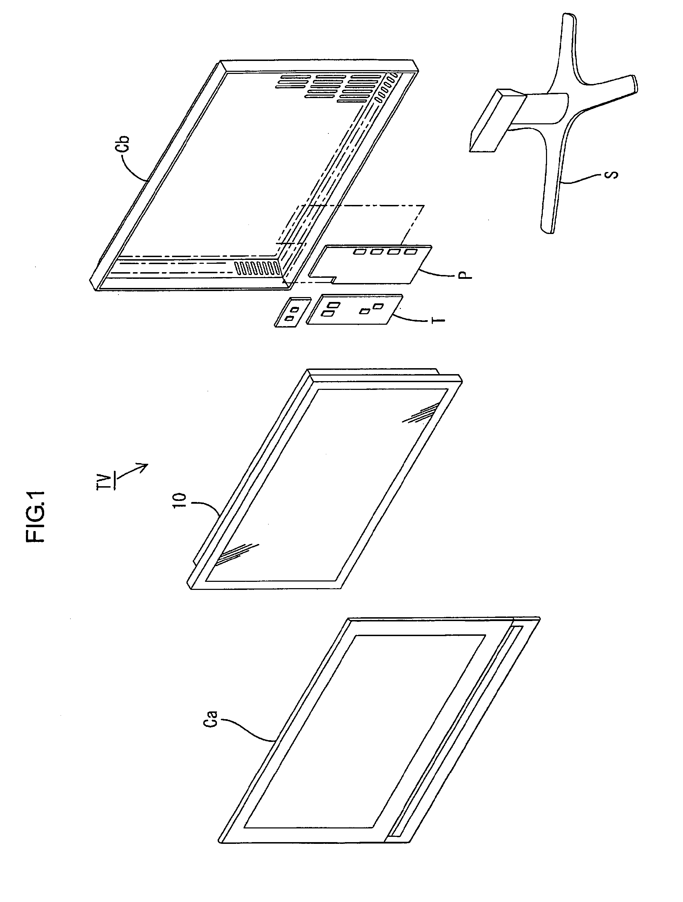

The first embodiment of the present invention will be explained with reference to FIGS. 1 to 11. First, a construction of a television receiver TV including a liquid crystal display device 10 will be explained.

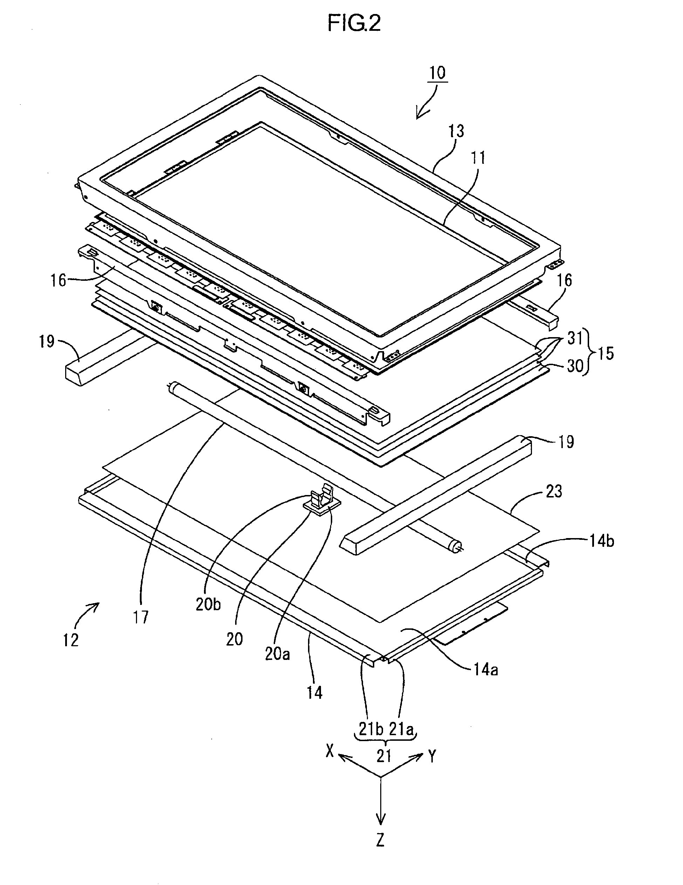

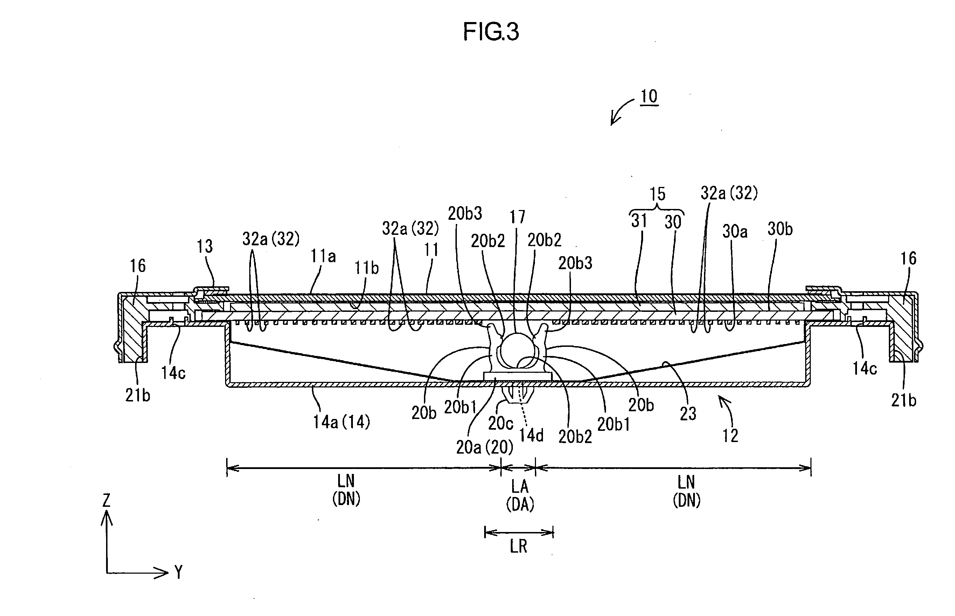

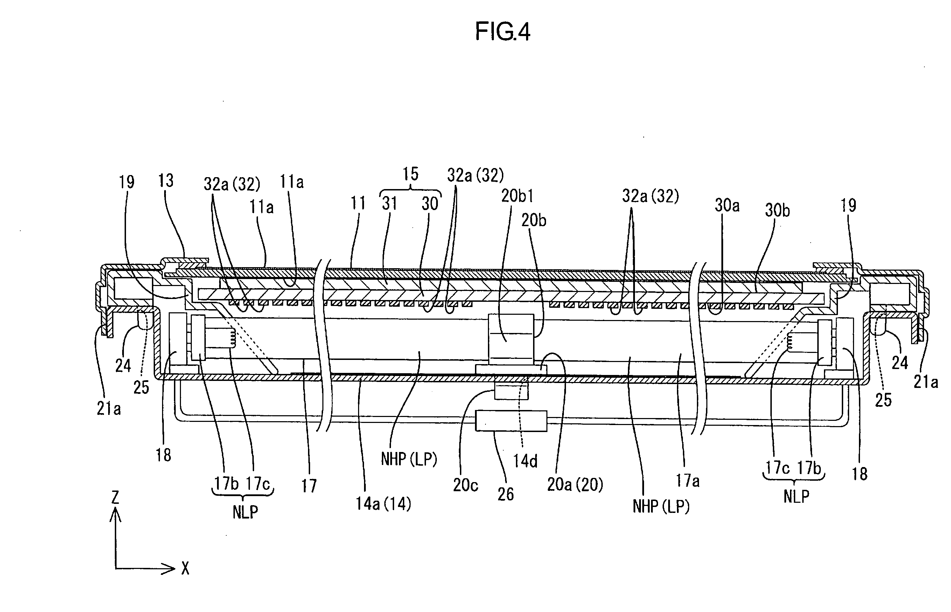

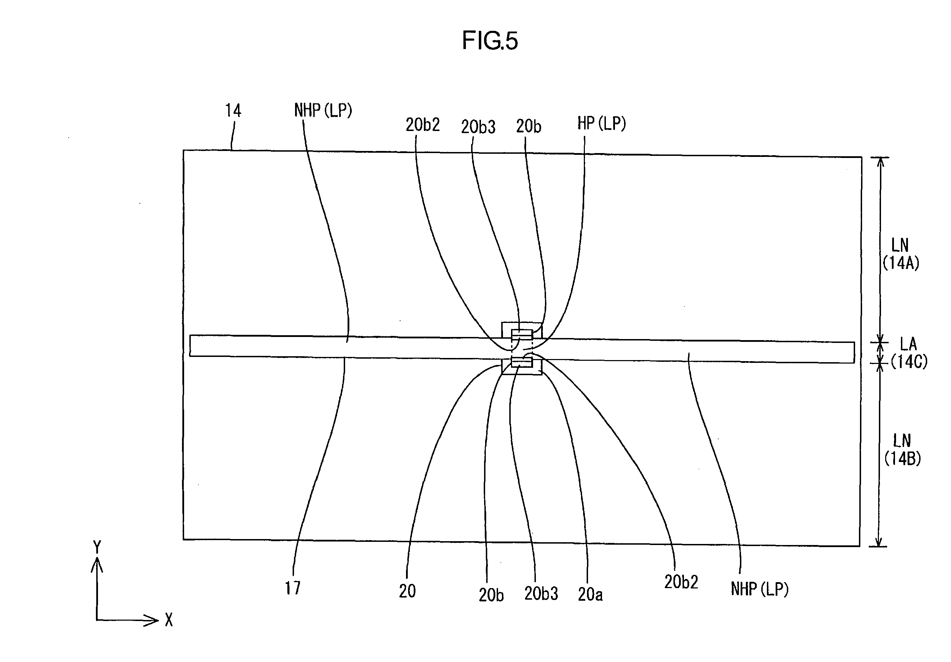

FIG. 1 is an exploded perspective view illustrating a general construction of the television receiver of this embodiment. FIG. 2 is an exploded perspective view illustrating a general construction of the liquid crystal display device provided in the television receiver. FIG. 3 is a cross-sectional view along the short-side direction of the liquid crystal display device in FIG. 2. FIG. 4 is a cross-sectional view along the long-side direction of the liquid crystal display device in FIG. 2. FIG. 5 is a plan view illustrating locations of a hot cathode tube and a lamp clip relative to a chassis included in the liquid crystal display device. In FIG. 5, the long-side direction and the short-side direction of the chassis correspond to the X-axis direction and the Y-axis direction, respectively.

As illustrated in FIG. 1, the television receiver TV of the present embodiment includes the liquid crystal display device 10, front and rear cabinets Ca, Cb that house the liquid crystal display device 10 therebetween, a power source P, a tuner T and a stand S. An overall shape of the liquid crystal display device (display device) 10 is a landscape rectangular. The liquid crystal display device 10 is housed in a vertical position. As illustrated in FIG. 2, it includes a liquid crystal panel 11 as a display panel, and a backlight device 12 (lighting device), which is an external light source. They are integrally held by a frame-like bezel 13 and the like. The television receiver TV of this embodiment has a 32-inch screen size with an aspect ratio of 16:9. More specifically, the width (the X dimension) and the height (the Y dimension) of the screen are about 698 mm and about 392 mm, respectively.

Next, the liquid crystal panel 11 and the backlight device 12 included in the liquid crystal display device 10 will be explained (see FIGS. 2 to 4).
The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, a color filter having color sections such as R (red), G (green) and B (blue) color sections arranged in a predetermined pattern, counter electrodes, and an alignment film are provided. Polarizing plates 11a, 11b are attached to outer surfaces of the substrates (see FIGS. 3 and 4) .

As illustrated in FIG. 2, the backlight device 12 includes a chassis 14, an optical sheet set 15 (a diffuser plate (a light diffuser member) 30 and a plurality of optical sheets 15b that are disposed between the diffuser plate 30 and the liquid crystal panel 11), and frames 16. The chassis 14 has a substantially box-shape and an opening 14b on the light output side (on the liquid crystal panel 11 side). The optical sheet set 15 is arranged so as to cover the opening 14b of the chassis 14. The frames 16 arranged along the long sides of the chassis 14 hold the long-side edges of the diffuser plate 30 to the chassis 14. The long-side edges of the light guide plate 15a are sandwiched between the chassis 14 and the frames 16. A hot cathode tube 17, sockets 18, and holders 19 are installed in the chassis 14. The hot cathode tube 17 is a linear light source. The sockets 18 are connected to ends of the hot cathode tube 17 for making electrical connection. Each holder 19 collectively covers each end of the hot cathode tube 17 and the corresponding socket 18. Furthermore, a lamp clip 20 is provided inside the chassis 14 and holds the hot cathode tube 17 from the rear side (from the bottom plate 14a side or a side opposite from a light exit side). A light exit side of the backlight device 12 is a side closer to the optical member set 15 than the hot cathode tube 17.

The chassis 14 is prepared by processing a metal plate. It is formed in a substantially shallow box shape. As illustrated in FIGS. 3 and 4, it includes a rectangular bottom plate 14a and outer rims 21 (including short-side outer rims 21a and long-side outer rims 21b). Each of the outer rims 21 extends upright from the corresponding side of the bottom plate 14a and has a substantially U shape. The bottom plate 14a of the chassis 14 has insertion holes in edge areas thereof close to ends of the long dimension thereof. The sockets 18 are passed through the respective insertion holes. As illustrated in FIG. 3, fixing holes 14c are provided in the upper surface of the chassis 14 along the long-side outer rims 21b to bind the bezel 13, the frames 16 and the chassis 14 together with screws and the like.

A light reflecting sheet 23 is disposed on an inner surface of the bottom plate 30 of the chassis 14 (on a side that faces the hot cathode tube 17). The light reflecting sheet 23 is a synthetic resin sheet having a surface in white color that provides high light reflectivity. The light reflecting sheet 23 is placed so as to cover almost entire inner surface of the bottom plate 14a of the chassis 14. As illustrated in FIG. 3, long-side edges of the light reflecting sheet 23 are lifted so as to cover the long-side outer rims 21b of the chassis 14 and sandwiched between the chassis 14 and the optical member set 15. Parts of the light reflecting sheet 23 between a part thereof extending along the bottom plate 14a of the chassis 14 and parts thereof sandwiched between the chassis 14 and the optical member set 15 are gently sloped. With this light reflecting sheet 23, light emitted from the hot cathode tubes 17 is reflected to the optical member set 15.

As illustrated in FIG. 4, the optical member set 15 has a landscape rectangular similar to the liquid crystal panel 11 and the chassis 14 when viewed in plan. The optical member set 15 is arranged between the liquid crystal panel 11 and the hot cathode tube 17. The optical member set 15 includes the diffuser plate 30 arranged on the rear side (on the hot cathode tube 17 side or the side opposite from the light exit side) and the optical sheets 31 arranged on the front side (on the liquid crystal panel 11 side or the light exit side). The diffuser plate 30 includes a transparent resin base substrate with a predetermined thickness and a large number of diffusing particles scattered inside the base substrate. The diffuser plate 30 is configured to diffuse light passing therethrough and reflect light emitted from the hot cathode tube 17, which will be explained in detail later. Each optical sheet 31 has a sheet-like shape with thickness smaller than that of the diffuser plate 30. Three of the optical sheets 31 are layered. Specifically, the optical sheets 31 are a diffuser sheet, a lens sheet, and a reflection type polarizing sheet arranged in this order from the diffuser plate 30 side (or the rear side).

As illustrated in FIGS. 3 and 4, the hot cathode tube 17 includes a glass tube 17a and electrodes 17b. The glass tube 17a is a hollow glass tube having a tubular (or linear) overall shape. The electrodes 17b are arranged at the respective ends of the glass tube 17a. Mercury and noble gas are sealed within the glass tube 17a. A fluorescent material is applied to the inner wall of the glass tube 17a. A filament 17c and terminals connected to the respective ends of the filament 17c are provided at each end of the glass tube 17a. The sockets 18 are fitted onto the respective ends of the hot cathode tube 17. The terminals are connected to an inverter board set 26 mounted to the outer surface (or the rear surface) of the bottom plate 14a of the chassis 14 via the sockets 18. The inverter board set 26 is configured to supply driving power to the hot cathode tube 17 and to control a tube current, that is, to control brightness (or illumination). The middle portion of the hot cathode tube 17, which is located more to the center of the hot cathode tube 17 than the filaments 17c with respect to the axial direction thereof, is a luminous portion LP. Light is emitted from the luminous portion LP. The two end portions of the hot cathode tube 17 in which the filaments 17c and the electrodes 17b are provided are non-luminous portion NLP. Light is not emitted from the non-luminous portion NLP. The hot cathode tube 17 is arranged between the diffuser 30 and the bottom plate 14a of the chassis 14 (or the light reflecting sheet 23) closer to the bottom plate 14a of the chassis 14 than to the diffuser 30. The hot cathode tube 17 extends along the plate surface of the bottom plate 14a of the diffuser 30 or the chassis 14. The hot cathode tube 17 is held such that a distance from the diffuser 30 or the bottom plate (or the light reflecting sheet 23) is constant for an entire length thereof. The outer diameter of the hot cathode tube 17 is about 15.5 mm, which is larger than that of a cold cathode tube (e.g., 4 mm).

The hot cathode tube 17 having the above configuration is arranged in the chassis 14 with the longitudinal direction (the axial direction) aligned with the long-side direction of the chassis 14. Furthermore, the hot cathode tube 17 is arranged at the around the center of the chassis 14 with respect to the short-side direction of the chassis 14. The bottom plate 14a of the chassis 14 (the part opposite the optical member 15 and the hot cathode tube 17) is divided into a first edge area 14A, a second edge area 14B, and a middle area 14C. The first edge area 14A and the second edge area 14B are located close to one end of the short dimension of the bottom plate 14a and the other end, respectively. The middle area 14C is located between the first edge area 14A and the second edge area 14B. The middle area 14C is a light-source installed area LA. Light sources are not arranged in the first edge area 14A and the second edge area 14B. The first edge area 14A and the second edge area 14B are light-source non-installed areas LN, respectively. Namely, the light-source installed area LA including the hot cathode tube 17 is present only in the middle area 14C, which is located around the center of the short dimension of the bottom plate 14a of the chassis 14. The area (or the Y dimension) of the light-source installed area LA is smaller than the area (or the Y dimension) of the light-source non-installed area LN. A percentage of the overall area (or the height (or the short dimension) of the screen with respect to the area (or the Y dimension) of the light-source installed area LA is about 4 %. The areas of the light-source non-installed areas LA are substantially the same. The hot cathode tube 17 has a length substantially equal to the width (or the long dimension) of the screen.

The holders 19 that cover the ends of the hot cathode tube 17, that is, the non-luminous portions NLP and the sockets 18, are made of white synthetic resin. Each of them has an elongated box-like shape that extends along the short side of the chassis 14 as illustrated in FIG. 2. As illustrated in FIG. 4, each holder 19 has steps on the front side for holding the optical member set 15 and the liquid crystal panel 11 at different levels. A part of the holder 19 is placed on top of a part of the corresponding short-side outer rim 21a of the chassis 14 and forms a side wall of the backlight device 12 together with the outer rim 21a. An insertion pin 24 projects from a surface of the holder 19 that faces the outer rim 21a of the chassis 14. The holder 19 is mounted to the chassis 14 by inserting the insertion pin 24 into the insertion hole 25 provided in the top surface of the outer rim 21a of the chassis 14.

The lamp clip (a light-source holding member) 20 is made of synthetic resin (e.g., polycarbonate) having a white or a pale-colored surface having high light reflectivity. The lamp clip 20 holds (or supports) the middle portion, which is the luminous portion LP, of the hot cathode tube 17 having a length corresponding to the long dimension of the chassis 14 from the rear side. Therefore, the luminous portion LP is less likely to be deformed, or curved. With this configuration, the luminous portion LP is less likely to be damaged. Furthermore, a relative position of the luminous portion LP to the optical member set 15 (especially the diffuser 30) with respect to the Z-axis direction (a distance or a gap therebetween) and a relative position of the luminous portion LP to the bottom plate 14a of the chassis 14 can be maintained constant. By maintaining the relative position of the luminous portion LP to the optical member set 15, the optical member set 15 can stably perform its intended optical function. By maintaining the relative position of the luminous portion LP to the bottom plate 14a of the chassis 14, a leak current to the chassis 14 can be controlled.

As illustrated in FIGS. 2 to 4, the lamp clip 20 includes a main body 20a, a lamp gripper (light-source gripper) 20b, and a stopper 20c. The main body 20a extends along the bottom plate 14a of the chassis 14. The lamp gripper 20b projects from the main body 20a toward the front side (the optical member set 15 side). The stopper 20c projects from the main body 20a to the rear side (toward the bottom plate 14a of the chassis 14). The main body 20a has a plate-like shape extending along the bottom plate 14a of the chassis 14. The main body 20 has a rectangular plan-view shape. The main body 20a is formed in a plan-view size larger than that of the lamp gripper 20b, which will be explained later. The stopper 20c has a pair of elastic holding pieces. The elastic holding pieces are passed through the mounting hole 14d of the chassis 14 and elastically held to the edges of the mounting hole 14d from the rear side. As a result, the lamp clip 20 is mounted to the chassis 14 and held in that condition.

As illustrated in FIG. 3, the lamp gripper 20b surrounds (or covers) a part of periphery of the luminous portion of the hot cathode tube 17. The lamp gripper 20b is formed in an open-end ring shape having an opening at the top. The hot cathode tube 17 can be attached to or removed from the lamp clip 20 through the opening. Specifically, the lamp gripper 20b includes arms 20b1 and holding protrusions 20b2. Each arm 20b rises from the main body 20a toward the front side. Each holding protrusion 20b2 projects inward from the inner surface of an end portion of the corresponding arm 20b1. Another holding protrusion 20b2 is provided on the bottom inner surface of the lamp gripper 20b. The lamp gripper 20b supports the hot cathode tube 17 at three points by the holding protrusions 20b2. Gaps for allowing light to exit are provided between the outer surface of the hot cathode tube 17 and the inner surface of the lamp gripper 20b. Furthermore, a guide 20b3 for guiding mounting of the hot cathode tube 17 is provided on the outer surface of the end portion of each arm 20b1. The guide 20b3 projects from the outer surface toward the front side. The tip of the guide 20b3 is located closer to the diffuser 30 than the hot cathode tube 17. The lamp gripper 20b are symmetric about the Z-axis.

As illustrated in FIG. 5, the lamp gripper 20b has a rectangular plan-view overall shape. When the hot cathode tube 17 is held by the lamp gripper 20b, the holding protrusions 20b2 at the end portions of the arms 20b1 and the guides 20b3 are located more to the front side than the hot cathode tube 17. The holding protrusions 20b2 are arranged on the respective sides of the hot cathode tube 17 so as to be separated from each other when viewed in plan. The guides 20b3 are also arranged on the respective sides of the hot cathode tube 17 so as to be separated from each other when viewed in plan. As illustrated in FIG. 3, a part of the luminous portion LP of the hot cathode tube 17 held by the lamp gripper 20b (hereinafter referred to as a held part HP) has an exposed area and a covered area. The exposed area is located between the holding protrusions 20b2 at the end portions of the arms 20b1, and exposed to the front side. The covered area is covered by the arms 20b1 (and holding protrusions 20b2) and the main body 20a. Light exiting from the held portion HP of the luminous portion LP is blocked by the lamp gripper 20b. Therefore, the amount of light traveling toward the diffuser 30 is relatively small compared to the amount of light exiting from a non-held portion, which is not held by the lamp gripper 20b, and traveling toward the diffuser 30.

As illustrated in FIG. 5, the lamp clip 20 having the above configuration is arranged at a predetermined location inside the chassis 14. Specifically, the lamp clip 20 is arranged around the center of the X-dimension and the center of the Y-dimension of the chassis 14. Namely, the center portion of the hot cathode tube 17 with respect to the longitudinal direction is held by the lamp clip 20. The deformation, or the curve, of the hot cathode tube 17 is effectively reduced. The lamp clip 20 is arranged so as to overlap the hot cathode tube 17 when viewed in plan and in the light-source installed area LA (or the middle area 14C) of the chassis 14.

Next, a light reflecting function of the diffuser plate 30 will be explained in detail.

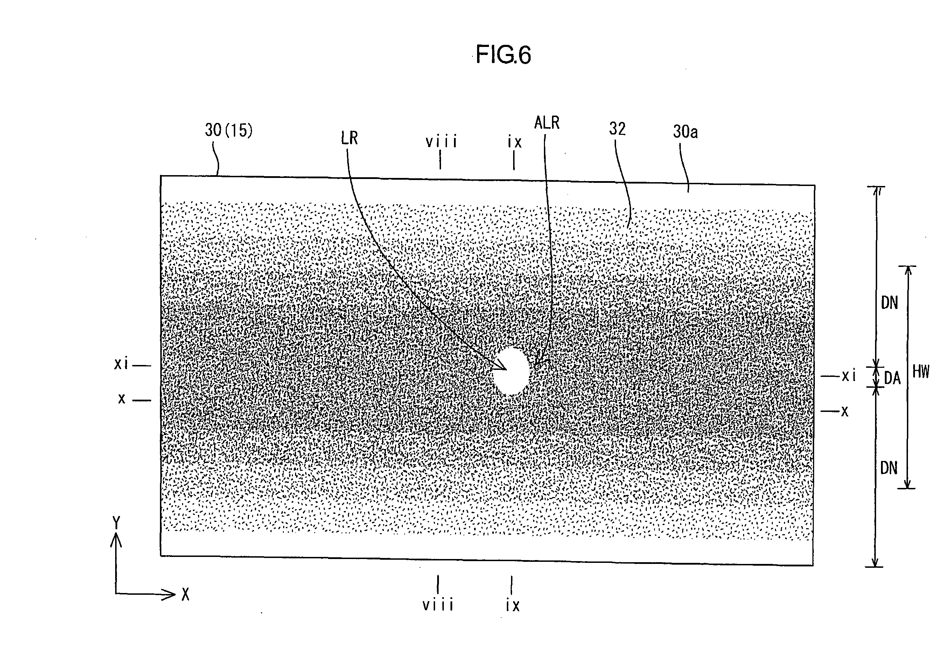

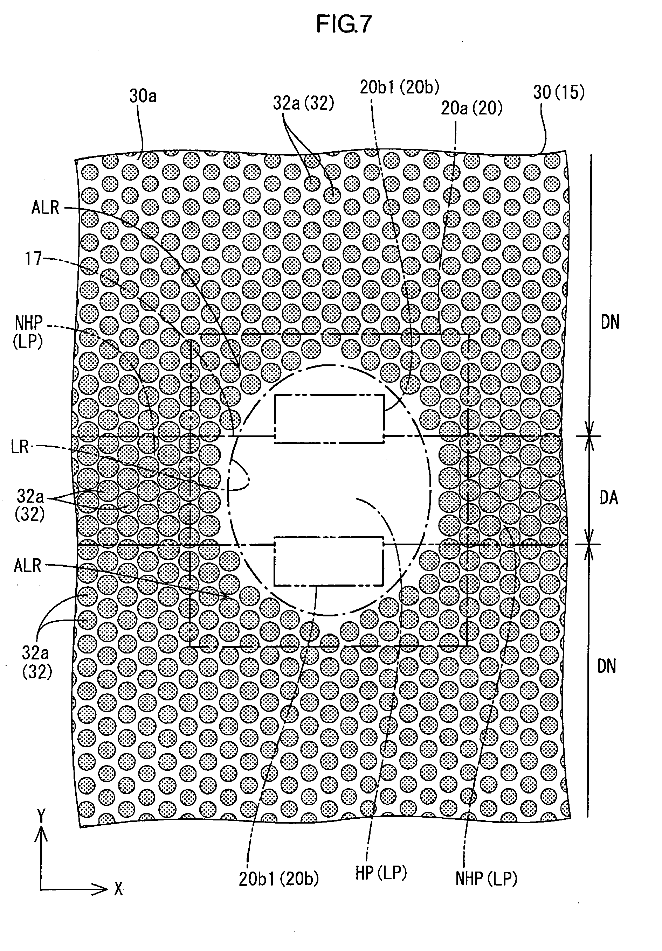

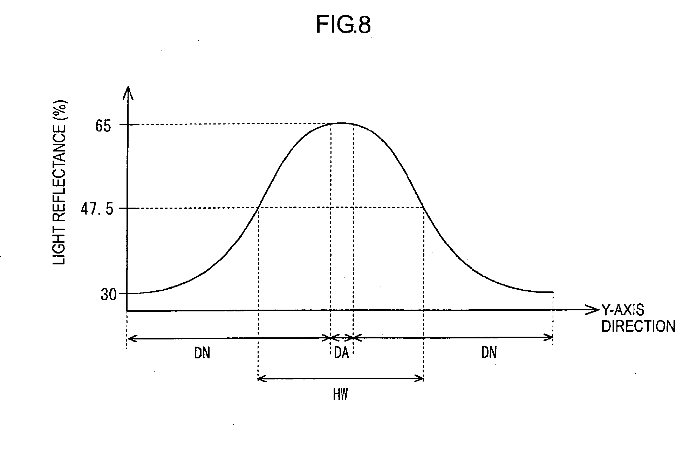

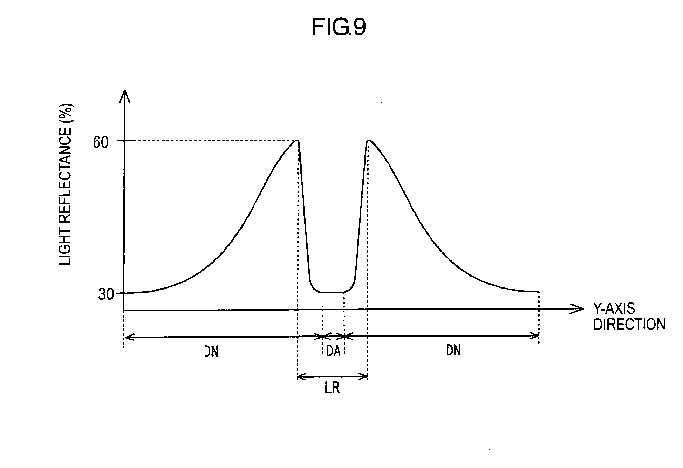

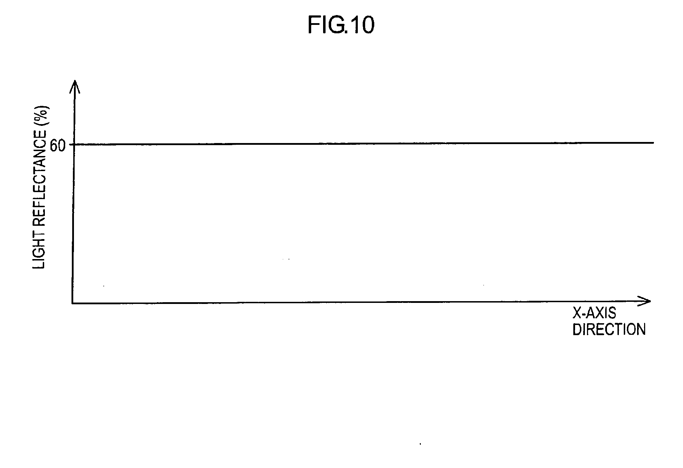

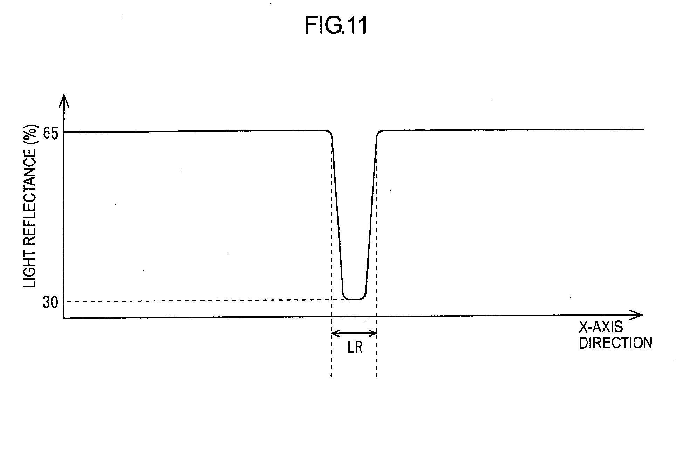

FIG. 6 is a plan view illustrating a light reflectance distribution of a diffuser plate. FIG. 7 is a magnified partial plan view of a relevant part of the diffuser plate illustrating a general configuration of a surface thereof opposite the hot cathode tube. FIGS. 8 and 9 are graphs illustrating reflectance changes with respect to the short-side direction of the diffuser plate in FIG. 6. FIGS. 10 and 11 are graphs illustrating reflectance changes with respect to the long-side direction of the diffuser plate in FIG. 6. In FIGS. 8 to 11, the long-side direction of the diffuser plate is referred to as an X-axis direction and the short-side direction thereof is referred to as a Y-axis direction. In FIGS. 8 and 9, a horizontal axis shows the Y-axis direction (short-side direction) and the light reflectance is plotted on a graph from the lower edge to the upper edge of the diffuser plate in FIG. 6 along the Y-axis direction. In FIGS. 10 and 11, a horizontal axis shows the X-axis direction (long-side direction) and the light reflectance is plotted on a graph from the left edge to the right edge of the diffuser plate in FIG. 6 along the X-axis direction.

The diffuser plate 30 includes a resin base substrate that is substantially transparent (e.g., polystyrene) and a predetermined quantity of diffusing particles scattered inside the base substrate. The diffusing particles are provided for diffusing light. The light transmissivity and the light reflectance of the diffuser plate 30 are substantially constant in entire areas thereof. The light transmissivity and the light reflectance of the base substrate of the diffuser plate 30 (excluding a light reflector 32, which will be explained later) are about 70% and about 30%, respectively. The diffuser plate 30 has a surface opposite the hot cathode tube 17 (hereinafter referred to as a first surface 30a) and a surface opposite the liquid crystal panel 11 (hereinafter referred to as a second surface 30b). The second surface 30b is located opposite from the first surface 30a. The first surface 30a is a light entrance surface through which light from the hot cathode tube 17 enters. The second surface 30b is a light exit surface through which light (irradiation light) exits toward the liquid crystal panel 11.

As illustrated in FIGS. 6 and 7, the light reflector 32 including white dots is provided on the first surface 30a of the diffuser plate 30, which is the light entrance surface. A plurality of the dots 32a of the light reflector 32 are arranged in a zigzag pattern (or in a staggered pattern). Each dot 32a has a round plan-view shape. A dot pattern of the light reflector 32 is formed by printing pastes containing metal oxide on the surface of the diffuser plate 30. Screen printing or inkjet printing is appropriate for printing the pastes. The light reflector 32 has the light reflectance of about 75%, which is higher than the in-plane light reflectance of the diffuser plate 30 is about 30%. The light reflectance of material used in this embodiment is an average light reflectance of measurements within a measurement circle by a Konica Minolta CM-3800d spectrophotometer with LAV (a measuring diameter: φ25.4 mm). The light reflector 32 is provided over the surface of the glass substrate and a light reflectance on the surface is measured by the above method. The light reflectance of the light reflector 32 is defined based on the measured reflectivity.

The diffuser plate 30 has a long dimension (along the X-axis direction) and a short dimension (along the Y-axis direction). As illustrated in FIG. 8, the light reflectance at the first surface 30a of the diffuser plate 30 opposite the hot cathode tube 17 varies along the short-side direction by altering the dot pattern of the light reflector 32 (see FIGS. 3 and 6). As illustrated in FIG. 6, the diffuser plate 30 is configured such that the light reflectance at an area of the first surface 30a overlapping the hot cathode tube 17 (hereinafter referred to as a light-source overlapping area DA) is generally higher than the reflectivity at an area of the first surface 30 not overlapping the hot cathode tube 17 (hereinafter referred to as a light-source non-overlapping area DN). As illustrated in FIG. 10, the light reflectance at the first surface 30a of the diffuser plate 30 does not vary along the long-side direction. Namely, the light reflectance is substantially constant along the long-side direction (see FIGS. 4 and 6).

The distribution of the light reflectance of the diffuser plate 30 will be explained in detail. As illustrated in FIGS. 6 to 8, the light reflectance of the diffuser plate 30 gradually decreases along the short-side direction as a distance from the hot cathode tube 17 increases, and gradually increases as the distance from the hot cathode tube 17 decreases. The light reflectance follows a normal distribution (or a bell-shaped curve). Specifically, the light reflectance at the diffuser plate 30 is the highest at the middle of the short dimension of the diffuser plate 30 (corresponding to the center of the hot cathode tube 17) and the lowest at each end of the short dimension. The highest light reflectance is about 65% and the lowest light reflectance is about 30%, which is about equal to the light reflectance of the diffuser plate 30. At the each end of the short dimension of the diffuser plate 30, small parts of the light reflector 32 are provided or the light reflector 32 is not provided at all. Areas of the diffuser plate 30 have the light reflectance higher than the light reflectance calculated by adding the lowest light reflectance to a half of the light reflectance calculated by subtracting the lowest light reflectance from the highest light reflectance (e.g., about 47.5%). These areas do not include the low-light-reflectance area LR, which will be explained. These areas are half-value width areas HW. The width of each half-value width area HW is a half-value width of the diffuser plate 30. The percentage of the half-width with respect to the short dimension of the diffuser plate 30 is about 60%. About 60% of the entire area of the diffuser plate 30 around the center of the short dimension thereof is the half-value width area HW. About 20% of the area of the diffuser plate 30 in each edge portion of the diffuser plate 30 with respect to the short-side direction is an area outside the half- value width area HW. The half- value width area HW includes the light-source installed area LA and predetermined-width areas adjacent to the light source installed area LA.

To set the distribution of the light reflectance as above, the light reflector 32 is configured as follows. The largest dots 32a of the light reflector 32 are arranged at the center of the short dimension of the diffuser plate 30, that is, in an area corresponding to the center of the hot cathode tube 17. The dots 32a become smaller as a distance from the center increases. The smallest dots 32a are arranged the closest to the edges of the short dimension of the diffuser plate 30. Namely, the dots 32a become smaller as the distance from the center increases. With this configuration, a gentle distribution of intensity of the light in the entire area of the diffuser plate 30 can be achieved. The light reflectance may be adjusted by changing the intervals between the dots 32a having the same area.

In this embodiment, the lamp clip 20 is used for holding the hot cathode tube 17. With this configuration, the following problem may be created because the luminous portion LP of the hot cathode tube 17 is partially covered by the lamp gripper 20b of the lamp clip 20. Some rays of light exiting from the held portion HP of the luminous portion LP are blocked by the lamp gripper 20b that covers the periphery of the held portion HP. Therefore, the amount of light passing through a specific area of the optical member set 15 corresponding to the lamp gripper 20b. As a result, a dark area may be locally created.

As illustrated in FIG. 6, the diffuser plate 30 of this embodiment is configured such that the light reflectance of the specific area corresponding the lamp clip 20 is locally reduced. An area of the diffuser 30 overlapping the lamp clip 20 in plan view (a light-source-holding-member overlapping area) includes the low-light-reflectance area LR, the light reflectance at which is relatively lower than peripheral areas ALR. As illustrated in FIG. 7, the low-light-reflectance area LR is slightly larger than the area of the diffuser plate 30 overlapping the lamp gripper 20b in plan view (the light-source-holding-member overlapping area) with respect to the X-axis direction and the Y-axis direction. The low-light-reflectance area LR is smaller than the area of the diffuser plate 30 overlapping the main body 20a, that is, the area overlapping an entire plan-view area of the lamp clip (the light-source-holding-member overlapping area). The low-light-reflectance area LR corresponds to the plan-view area of the lamp gripper 20b that covers the periphery of the hot cathode tube 17 and with which the periphery is in direct contact. The low-light-reflectance area LR has a size slightly larger than an outside plan-view dimension of the lamp gripper 20b and an oval shape. The major axis and the minor axis of the low-light-reflectance area LR having the oval shape are aligned with the Y-axis direction and the X-axis direction, respectively. The holding protrusions 20b2 and the guides 20b3 of the lamp gripper 20b holding the hot cathode tube 17 are located on the front side. The low-light-reflectance area LR includes the area collectively including the holding protrusions 20b2 and the guides 20b3. The low-light-reflectance area LR further includes the area overlapping the held portion HP of the luminous portion LP of the hot cathode tube 17. The low-light-reflectance area LR is located at the center of the X dimension and the Y dimension of the diffuser plate 30 and formed in a point-like shape when the diffuser plate 30 is viewed in plan. The low-light-reflectance area LR is slightly larger than the light-source overlapping area DA.

The dots 32a of the light reflector 32 are not provided in the low-light-reflectance area LR. The dots 32a of the light reflector 32 are provided in the areas of the diffuser plate 30 (including the peripheral area ALR of the low-light-reflectance area LR) other than the low-light-reflectance area LR. The light reflectance in the low-light-reflectance area LR is lower than the light reflectance in the peripheral area ALR (a ring-shaped (or toroidal) area around the low-light-reflectance area LR). Specifically, the light reflectance in the low-light-reflectance area LR is about 30%, which is substantially equal to the lowest light reflectance in the entire area of the diffuser plate 30 (i.e. , the light reflectance in each edge area with respect to the short dimension of the diffuser plate 30). The light reflectance in the peripheral area ALR is about 60% (see FIGS. 9 and 11).

Next, variations in light reflectance in the low-light-reflectance area LR and the peripheral area ALR will be explained in detail. The light reflectance at the diffuser plate 30 gradually increases or decreases along the short-side direction as described earlier. As illustrated in FIG. 9, the light reflectance sharply drops from the peripheral area ALR to the low-light-reflectance area LR. The light reflectance sharply rises from the low-light-reflectance area LR to the peripheral area ALR. The light reflectance at the diffuser plate 30 is substantially constant along the long-side direction as described earlier. However, the light reflectance sharply drops when the area changes from the peripheral area LR to the low-light-reflectance area LR as illustrated in FIG. 11. The light reflectance sharply rises when the area changes from the low-light-reflectance area LR to the peripheral area ALR.

Next, functions of the liquid crystal display device 10 of this embodiment having the above configuration will be explained. When the hot cathode tube 17 is lit to use the liquid crystal display device 10, light emitted from the hot cathode tube 17 directly enters the diffuser plate 30 through the first surface 30a or indirectly enters the diffuser plate 30 after reflected by the light reflecting sheet 23, the holders 29, or the lamp clip 20. After traveling through the diffuser plate 30, the light exits from the diffuser plate 30 and travel toward the liquid crystal panel 11 via the optical sheets 31. The light reflecting function of the diffuser plate 30 will be explained in detail.

The light emitted from the hot cathode tube 17 enters the diffuser 30 through the first surface 30a. As illustrated in FIGS. 3 and 6, the light reflector 32 is provided on the first surface 30a. The light reflector is configured such that the light reflectance is different from area to area of the first surface 30a. Therefore, the light-entrance efficiency in each area can be properly controlled. The light entering through light-source overlapping area DA of the first surface 30a where the first surface 30a overlaps the hot cathode tube 17 is mainly direct light. Therefore, the amount of light therein is larger than the amount of light in the light-source non-overlapping area DN. By setting the light reflectance of the light reflector 32 in the light-source overlapping area DA relatively higher (see FIGS. 6 and 8), the amount of light entering through the first surface 30a can be reduced (or controlled). Moreover, a large amount of light is reflected by the chassis 14 and returned to the first surface 30a. In the light-source non-overlapping area DN where the first surface 30a does not overlap the hot cathode tube 17, the amount of light that directly enters through the first surface 30a is small. Therefore, the amount of light is smaller than the amount of light in the light-source overlapping area. By setting the light reflectance of the light reflector 32 in the light-source non-overlapping area DN relatively lower (see FIGS. 6 and 8), the amount of light entering through the first surface 30a can be increased. The light reflected by parts of the light reflector 32 in the light-source overlapping area DA to the inside of the chassis 14 is directed toward the light-source non-overlapping area DN. Namely, the amount of light entering through the light-source non-overlapping area is compensated by the reflected light. As a result, the sufficient amount of light enters through the light-source non-overlapping area DN.

The low-light-reflectance area LR having the low light reflectance lower than that of the peripheral area ALR is provided in the part of the light-source non-overlapping area DN of the first surface 30a of the diffuser plate 30 where the light-source non-overlapping area DN overlaps the lamp gripper 20b of the lamp clip 20. According to this embodiment, the following functions and effects can be achieved. The lamp gripper 20b surrounding the luminous portion LP of the hot cathode tube 17 is in direct contact with the luminous portion LP. Some rays of light exiting from the held portion HP of the luminous portion LP are blocked. The amount of light exiting from the held portion HP is smaller than the amount of light exiting from the non-held portion NHP that is not held by the lamp gripper 20b. Furthermore, the lamp gripper 20b project from the main body 20a toward the front side closer to the diffuser plate 30 than the hot cathode tube 17. Therefore, the lamp gripper 20b may block the light traveling toward the diffuser plate 30 after reflected by the light reflecting sheet 23 or the holders 19. In the area of the diffuser plate 30 overlapping the lamp clip 20 in plan view, especially in the area overlapping the lamp gripper 20b, the amount of light entering therethrough tends to be locally small. Therefore, the low-light-reflectance area LR having the light reflectance lower than that of the peripheral area ALR is provided in the area of the diffuser plate 30 overlapping the lamp gripper 20b. With this configuration, the light entrance efficiency in the area in which the amount of light entering therethrough tends to be small can be locally improved. Therefore, the amount of light entering therethrough can be increased to the same level as the amount of light entering through the peripheral area ALR. The difference in amount of incident light, that is, amount of transmitting light between the low-light-reflectance area LR and the peripheral area ALR can be effectively compensated. With the above configuration, the amount of transmitting light within the first surface 30a of the diffuser plate 30 can be evened and the intensity distribution of light exiting from the second surface 30b of the diffuser plate 30 can be evened.

As described earlier, the backlight unit 12 of this embodiment includes the hot cathode tube 17, the chassis 14, the diffuser plate 30, and the lamp clip 20. The hot cathode tube 17 is a linear light source. The chassis 14 hoses the hot cathode tube 17. The chassis 14 has the opening 14b through which light from the hot cathode tube 17 exits. The diffuser plate 30 is a component of the optical member 15 that is arranged so as to face the hot cathode tube 17 and to cover the opening 14b. The lamp clip 20 is a light-source holder that holds the luminous portion LP of the hot cathode tube 17. The area of the diffuser plate 30 overlapping the lamp clip 20 (the light-source overlapping area) includes at least the low-light-reflectance area LR. The light reflectance of the low-light-reflectance area LR at the first surface 30a facing the hot cathode tube 17 is lower than that of the peripheral area ALR.

The luminous portion LP of the hot cathode tube 17 housed in the chassis 14 is held by the lamp clip 20. Therefore, the deformation such as a warp can be reduced. In the area of the luminous portion LP of the hot cathode tube 17 held by the lamp clip 20 (the held portion HP), some rays of the emitted light is blocked by the lamp clip 20. Therefore, the amount of light traveling from that area toward the diffuser plate 30 tends to be smaller than the amount of light traveling from other areas. In this embodiment, the area of the diffuser plate 30 overlapping the lamp clip 20 includes at least the low-light-reflectance area LR. The light reflectance of the low-light-reflectance area LR at the first surface 30a facing the hot cathode tube 17 is lower than that of the peripheral area ALR. Even when the amount of light traveling toward the low-light-reflectance area LR is smaller than the peripheral area ALR due to the lamp clip 20, the difference in amount of transmitting light between the low-light-reflectance area LR and the peripheral area ALR is less likely to be produced. With this configuration, the intensity distribution of light exiting from the optical member 15 can be evened.

The area of the chassis 14 facing the diffuser plate 30 is divided into the light source installed area LA, in which the hot cathode tube 17 is arranged, and the light-source non-installed area LN, in which the hot cathode tube 17 is not arranged. Because the hot cathode tube 17 is not arranged in the light-source non-installed area LN, the number of the hot cathode tubes 17 can be reduced in comparison to a configuration in which the hot cathode tubes are arranged all over the entire area of the chassis. Therefore, a cost and a power consumption of the backlight unit 12 can be reduced.

The area of the chassis 14 facing the diffuser plate 30 is divided into at least the first edge area 14A, the second edge area 14B, and the middle area 14C. The second edge area 14B is located closer to the other edge from the first edge area 14A. The middle area 14C is located between the first edge area 14A and the second edge area 14B. The middle area 14C is the light-source installed area LA. The first edge area 14A and the second edge area 14B are the light-source non-installed areas LN. With this configuration, a sufficient level of intensity can be achieved in the central area of the backlight unit 12. Therefore, a sufficient level of intensity can be achieved in the central area of the liquid crystal display device 10 including the backlight unit 12. As a result, good visibility can be achieved.

The area of the diffuser plate 30 except for the low-light-reflectance area LR includes the area overlapping the light source installed area LA (the light-source overlapping area LA) and the area overlapping the light-source non-installed area LN (the light-source non-overlapping area DN). The first surface 30a of the diffuser plate 30 is opposite the hot cathode tube 17. At least the light reflectance at the first surface 30a of the light-source overlapping area DA is higher than at least the light reflectance at the first surface 30a of the light-source non-overlapping area DN. With this configuration, the light emitted from the hot cathode tube 17 first reach the area of the diffuser plate 30 having the relatively high light reflectance. The light is mostly reflected (i.e., not transmitted). Therefore, the intensity of light is reduced relative to the amount of light emitted from the hot cathode tube 17. The reflected light can be reflected inside the chassis 14 and directed to the light-source non-installed area LN. The area of the diffuser plate 30 overlapping the light-source non-installed area LN has the relatively low light reflectance. Therefore, a larger amount of light is transmitted and the predetermined intensity of light can be achieved.

In the areas of the diffuser plate 30 except for the low-light-reflectance area LR, at least the light reflectance at the first surface 30a facing the hot cathode tube 17 decreases as the distance from the hot cathode tube 17 increases. With this configuration, the intensity of light in the light-source installed area LA and the intensity of light in the light-source non-installed area LN can be evened.

The light reflector 32 for reflecting light is provided on the first surface 30a of the diffuser plate 30 facing the hot cathode tube 17. With this configuration, the light reflectance at the first surface 30a of the diffuser plate 30 on the hot cathode tube 17 side can be properly adjusted according to the configuration of the light reflector 32.

The light reflector 32 is provided in the areas of the diffuser plate 30 other than the low-light-reflectance area LR. With this configuration, the sufficient amount of light transmitting through the low-light-reflectance area LR can be achieved. The difference in the amount of transmitting light between the low-light-reflectance area LR and the peripheral area ALR can be compensated. The sufficient amount of light transmitting through the low-light-reflectance area LR can be achieved. Therefore, the lamp clip 20 having low surface light reflectance can be used. Namely, the manufacturing cost of the lamp clip 20 can be reduced.

The light reflector 32 includes a large number of the dots 32a having light round shape when viewed in plane of the diffuser plate 30 from the hot cathode tube 17 side and reflectivity. With this configuration, the light reflectance can be easily adjusted according to the configuration of the dots 32a (e.g., the areas and the distribution density).

The lamp clip 20 includes the main body 20a and the lamp gripper 20b. The main body 20a extends along the chassis 14. The lamp gripper 20b projects from the main body 20a to the hot cathode tube 17 side and hold the hot cathode tube 17. With the main body 20a extending along the chassis 14, the lamp clip 20 can be stably mounted to the chassis 14. The hot cathode tube 17 can be properly held by the lamp gripper 20b projecting from the main body 20a on the hot cathode tube 17 side.

The low-light-reflectance area LR includes the area of the diffuser plate 30 overlapping the lamp gripper 20b (the light-source-holding-member overlapping area). The area of the diffuser plate 30 overlapping the lamp clip 20 (the light-source-holding-member overlapping area) includes the area overlapping the lamp gripper 20b projecting from the main body 20a on the hot cathode tube 17 side and being in direct contact with the luminous portion LP of the hot cathode tube 17. In that area, the light from the luminous portion LP is more likely to be blocked, and the amount of transmitting light may be reduced. Because the area overlapping the lamp gripper 20b is the low-light-reflectance area LR, the amount of transmitting light can be further effectively evened.

The lamp clip 20 has a white surface. With this configuration, the surface of the lamp clip 20 appropriately reflects light. Therefore, the light emitted from the cold cathode tube 17 can be effectively used.

The linear light source is the hot cathode tube 17. With the hot cathode tube 17, the high brightness can be achieved.

The first embodiment of the present invention has been described; however, the present invention is not limited to the above embodiment. The following modifications may be included in the technical scope of the present invention, for example. In the following modifications, similar components to those in the above embodiment will be indicated by the same symbols and may not be illustrated or explained.

### [First Modification of First Embodiment]

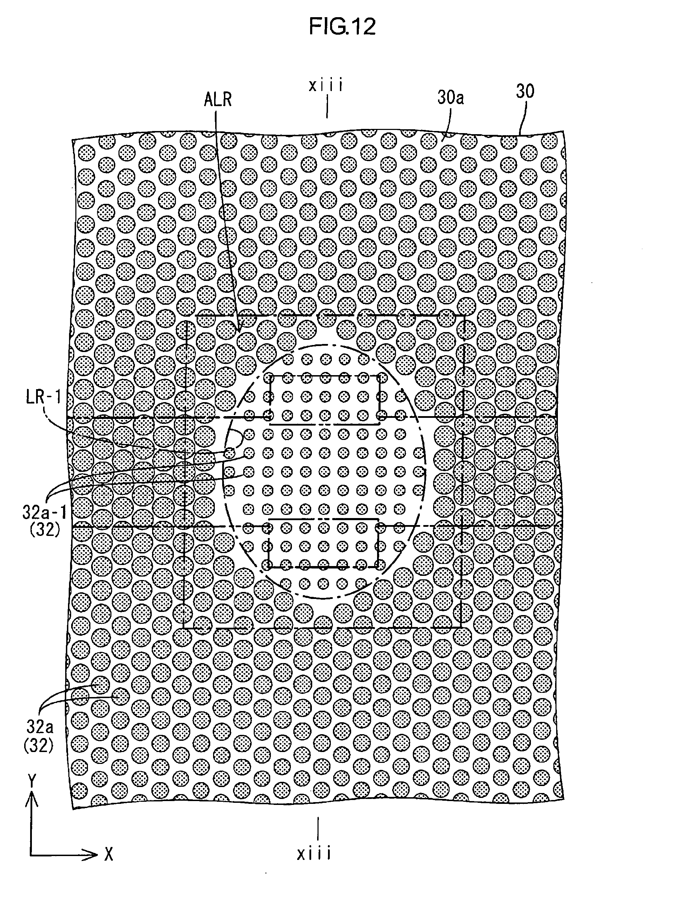

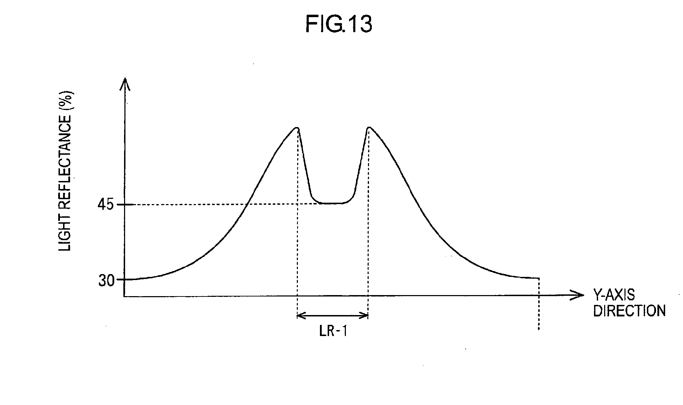

The first modification of the first embodiment will be explained with reference to FIGS. 12 and 13. In this modification, the light reflector 32 further includes dots 32a-1 arranged in a low-light-reflectance area LR-1. FIG. 12 is a magnified partial plan view of a relevant part of a diffuser plate illustrating a general configuration of a surface thereof opposite a hot cathode tube. FIG. 13 is a graph illustrating a reflectance change with respect to a short-side direction of the diffuser plate in FIG. 12. In FIG. 13, the horizontal axis indicates the Y-axis direction (the short-side direction), and this graph is drawn by plotting the light reflectance from the lower edge to the upper edge of the diffuser plate in FIG. 12 along the Y-axis direction.

As illustrated in FIG. 12, the dots 32a-1 of the light reflector 32 are provided in the low-light-reflectance area LR-1 of the first surface 30a of the diffuser plate 30. Each dot 32a-1 in the low-light-reflectance area LR-1 has an area smaller than that of the dots 32a in the peripheral area ALR. As illustrated in FIG. 13, the light reflectance in the low-light-reflectance area LR-1 is lower than the light reflectance in the peripheral area ALR but higher than the lowest light reflectance at the diffuser plate 30. The light reflectance in the peripheral area ALR around the low-light-reflectance area LR-1 is about 60% and the lowest light reflectance at the diffuser plate 30 is about 30%. The preferred light reflectance in the low-light-reflectance area LR-1 is about 45%. The areas of the dots 32a-1 in the low-light-reflectance area LR-1 are the same. Therefore, the light reflectance in the low-light-reflectance area LR-1 is substantially constant over the entire area. With this configuration, the amount of light transmitting through the low-light-reflectance area LR-1 and through the peripheral area ALR can be evened. The arrangement, the number, and the area of the dots 32a-1 of the light reflector 32 in the low-light-reflectance area LR-1 can be altered as appropriate from those in the drawing. The light reflectance thereof can be also altered as appropriate.

As described above, the light reflector 32 is provided in the low-light-reflectance area LR-1 of the diffuser plate 30 in addition to the other areas thereof. With this configuration, a difference between the amount of light passing through the low-light-reflectance area LR-1 and the amount of light passing through the peripheral area ALR can be appropriately compensated according to the configuration of the light reflector 32 provided in the low-light-reflectance area LR-1.

### [Second Modification of First Embodiment]

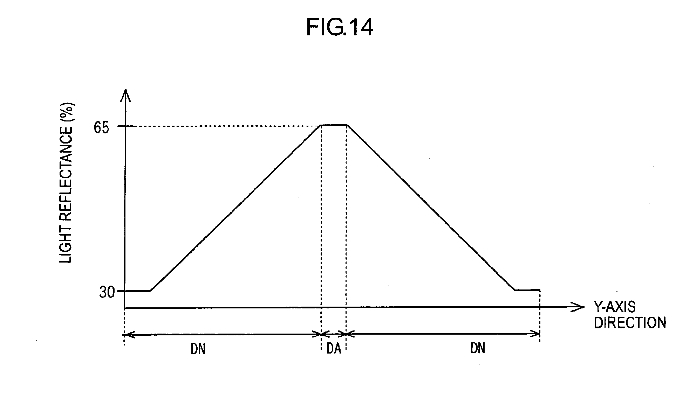

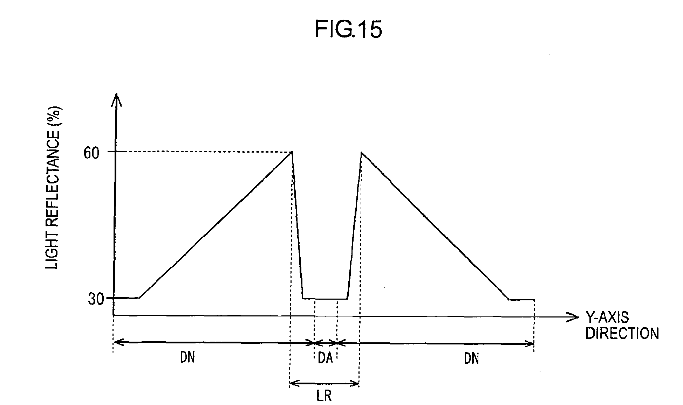

The second modification of the first embodiment will be explained with reference to FIGS. 14 and 15. In this modification, the distribution of light reflectance at the first surface 30a of the diffuser plate 30 is altered. FIGS. 14 and 15 are graphs illustrating reflectance changes with respect to the short-side direction of the diffuser plate.

As illustrated in FIG. 14, the light-source overlapping area DA of the first surface 30a of the diffuser plate 30 has a substantially constant light reflectance of 65%, which is the highest light reflectance at the diffuser plate 30. The light reflectance in the light-source non-overlapping portion DN gradually decreases (forming a slope) from areas close to the light-source overlapping area DA to the areas farther from the light-source overlapping area DA. The light reflectance in the edge areas located close to the edges of the short dimension (the Y dimension) of the diffuser plate 30 is 30%, which is the lowest light reflectance. The areas of the dots 32a of the light reflector 32 are the largest and the same in the light-source overlapping area DA. The areas of the dots 32a of the light reflector 32 gradually decrease inversely proportional to the distance from the light-source overlapping area DA in the light-source non-overlapping areas DN. As illustrated in FIG. 15, the light reflectance in the low-light-reflectance area LR of the first surface 30a of the diffuser plate 30 is lower than the light reflectance in the peripheral area ALR. The dots 32a of the light reflector 32 are not provided in the low-light-reflectance area LR. Therefore, the light reflectance is locally low, which is lowest at the first surface 30a of the diffuser 30.
The dots 32a of the light reflector 32 can be provided in the low-light-reflectance area LR as in the first modification.

### [Third Modification of First Embodiment]

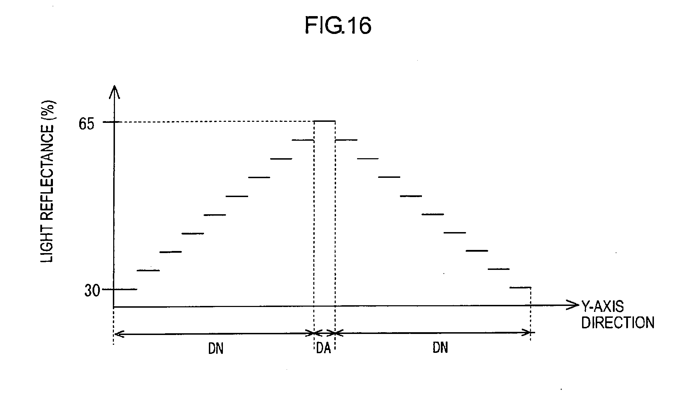

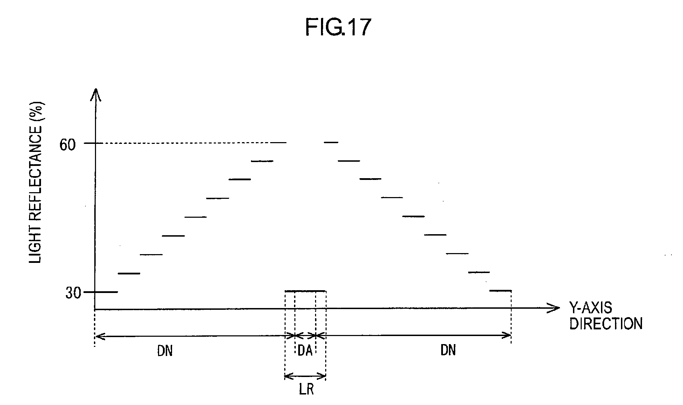

The third modification of the first embodiment will be explained with reference to FIGS. 16 and 17. In this modification, the distribution of the light reflectance at the first surface 30a of the diffuser 30 is further altered. FIGS. 16 and 17 are graphs illustrating reflectance changes with respect to the short-side direction of the diffuser plate.

As illustrated in FIG. 16, the light reflector 32 is configured such that the light reflectance at the first surface 30a of the diffuser plate 30 decreases stepwise from the light-source overlapping area DA to the light-source non-overlapping area DN. The areas of the dots 32a of the light reflector 32 (i.e., the light reflectance) are the largest and the same in the light-source overlapping area DA but decrease step wise as the distance from the light-source overlapping area DA increases. The areas of the dots 32a are the smallest in the edge areas located close to the edges of the short dimension (the Y dimension) of the diffuser plate 30. The light reflectance changes along the short-side direction (the Y-axis direction) of the diffuser plate 30 in the light-source non-overlapping area DN so as to form a bar graph.

As illustrated in FIG. 17, the light reflectance in the low-light-reflectance area LR of the first surface 30a of the diffuser plate 30 is lower than the light reflectance in the peripheral area ALR. The dots 32a of the light reflector 32 are not provided in the low-light-reflectance area LR. Therefore, the light reflectance is locally low, which is lowest at the first surface 30a of the diffuser 30. With this configuration, the distribution of intensity of light exiting from the diffuser plate 30 can be smoothed. With forming a plurality of areas having different light reflectance that changes stepwise, a method of manufacturing the diffuser plate 30 is simple and contributes to cost reduction.
The dots 32a of the light reflector 32 can be provided in the low-light-reflectance area LR of the diffuser plate 30 of this modification as in the first modification.

### <Second Embodiment>

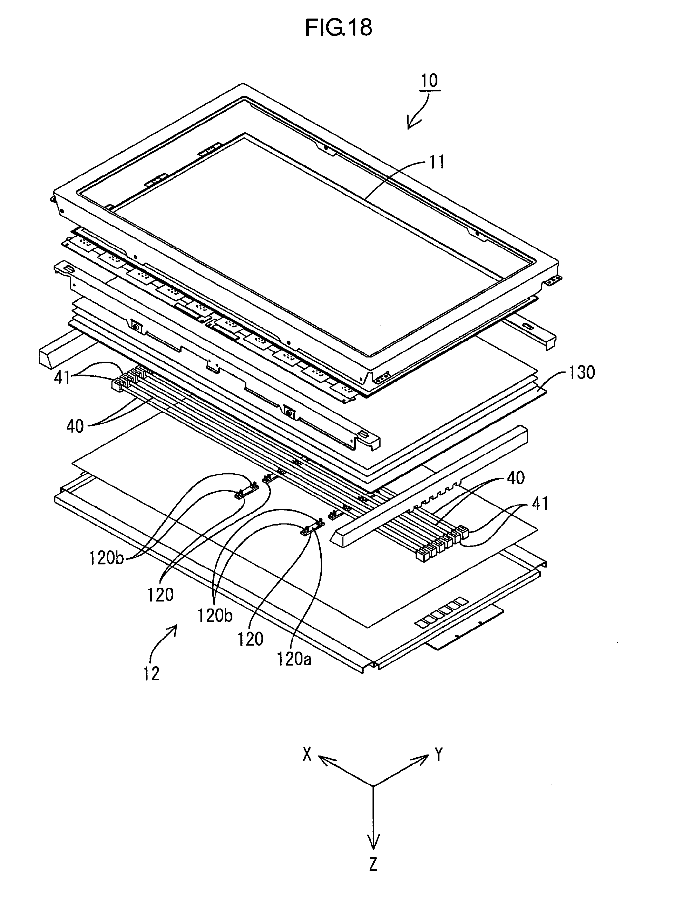

A second embodiment of the present invention will be explained with reference to FIGS. 18 to 27. In the second embodiment, cold cathode tubes 40 are used as light sources. In the second embodiment, the same components and parts as the first embodiment are indicated by the same symbols and will not be explained.

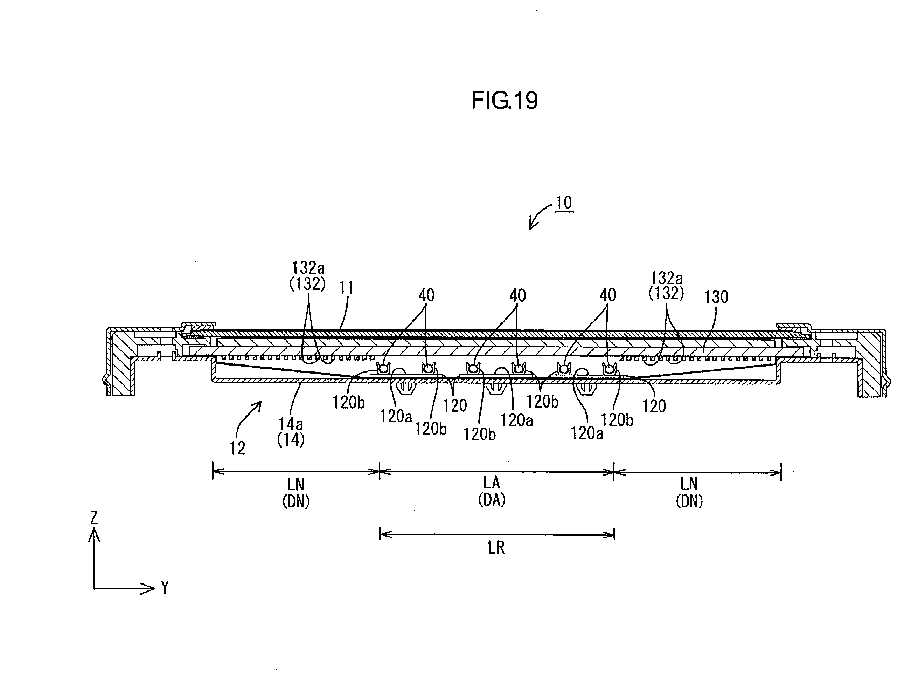

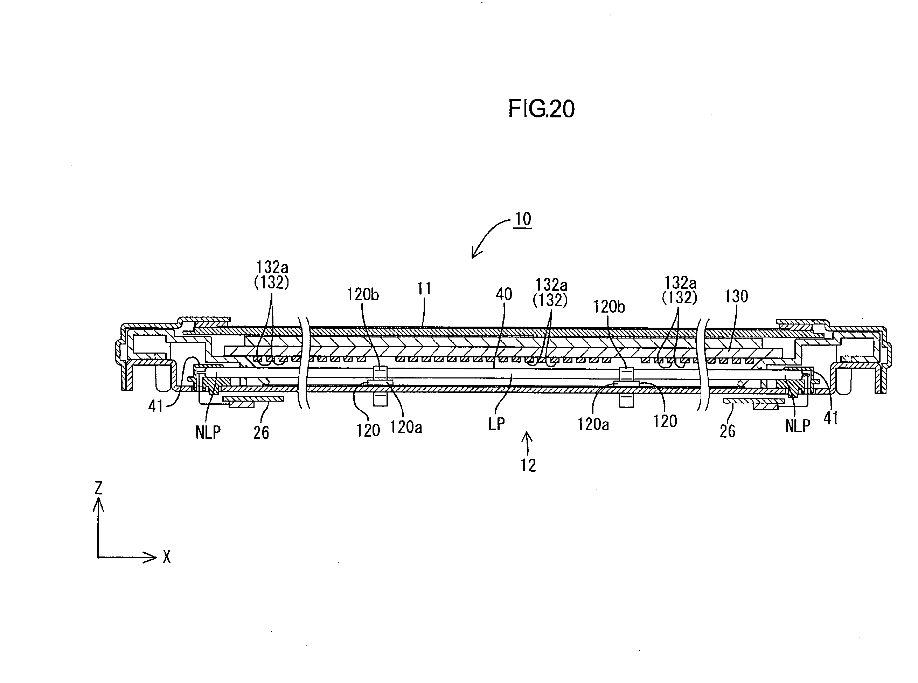

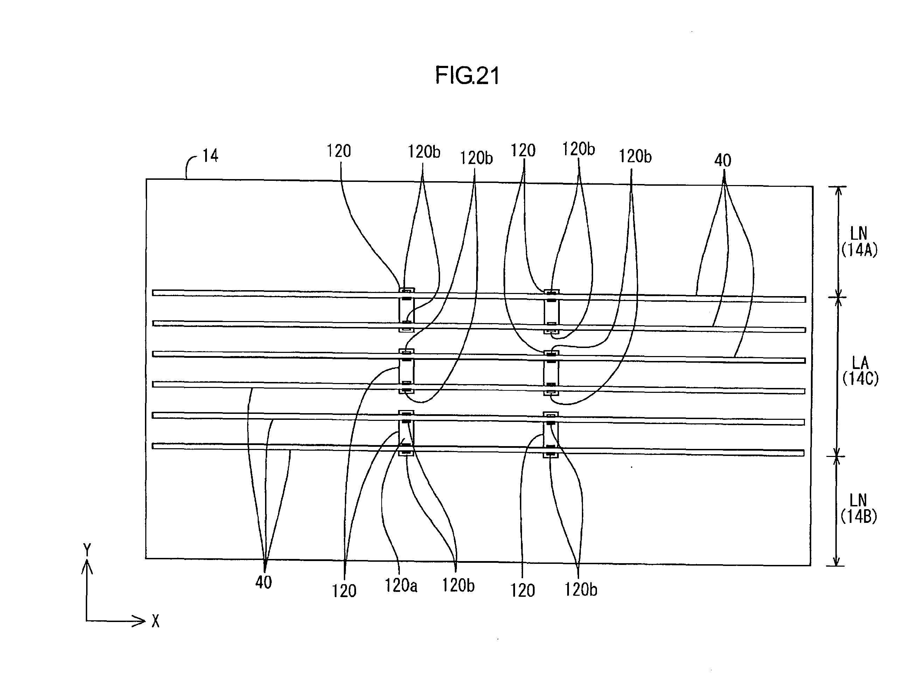

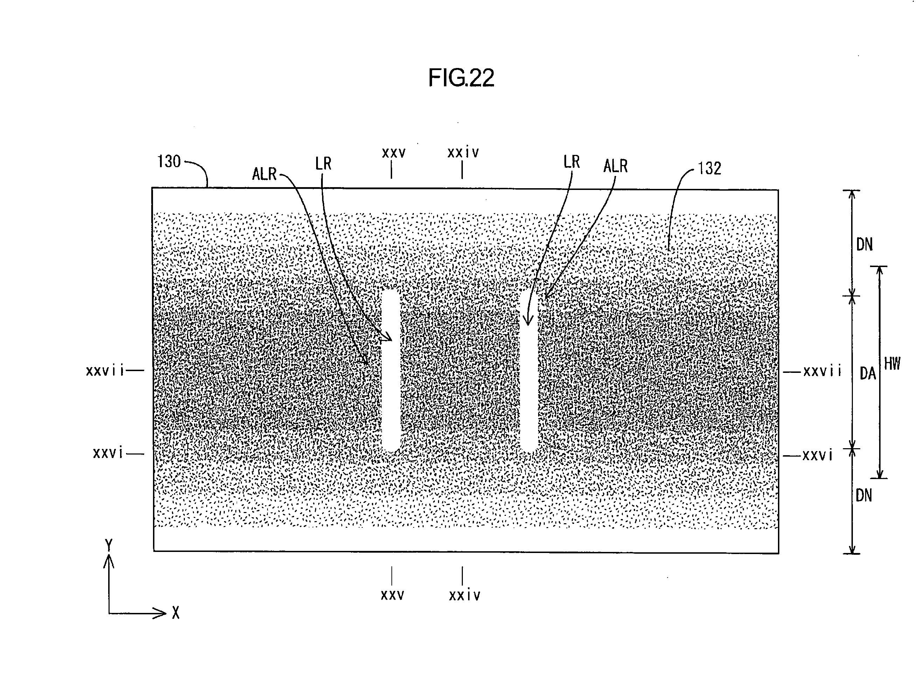

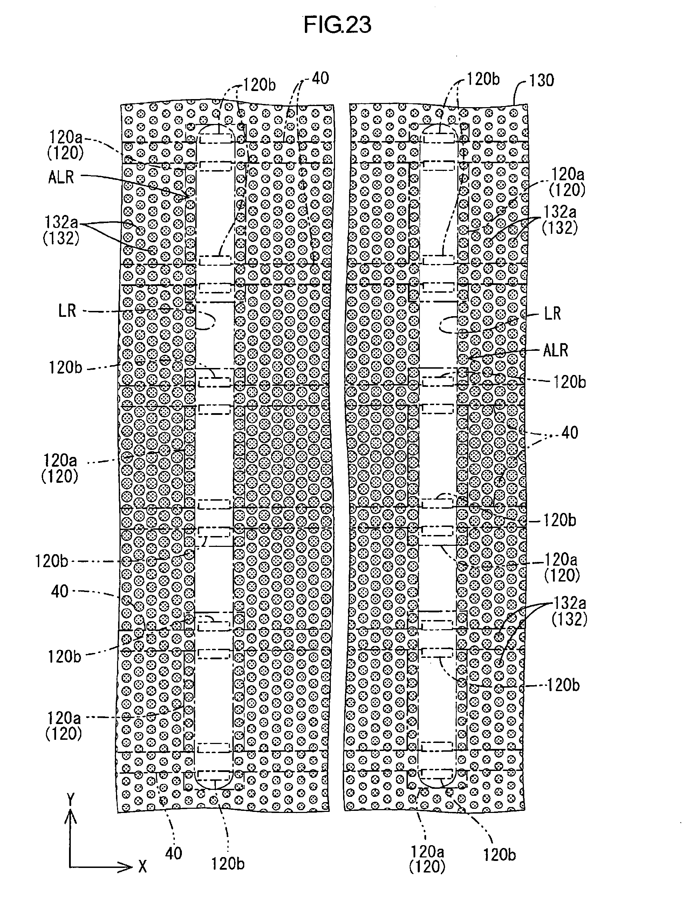

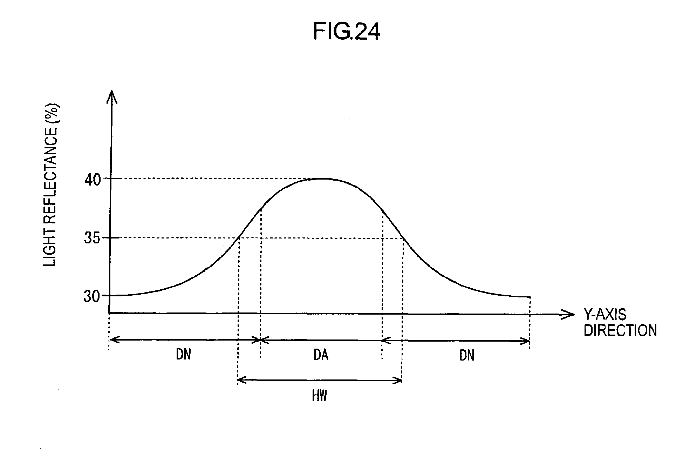

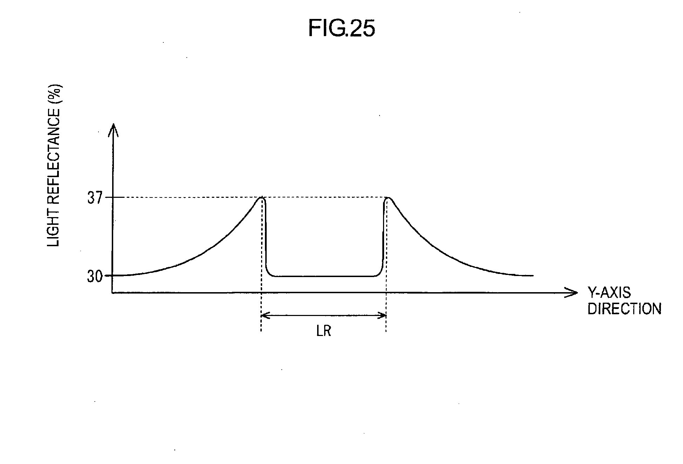

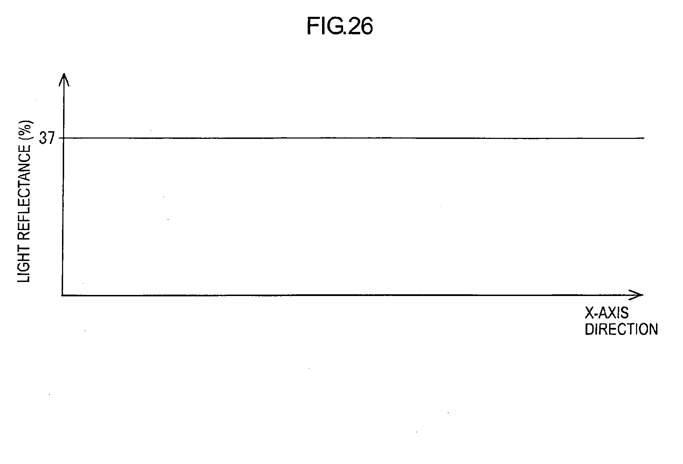

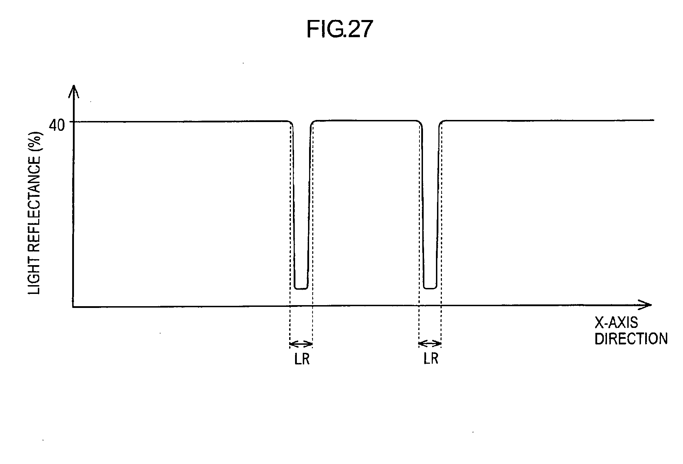

FIG. 18 is an exploded perspective view illustrating a general construction of a liquid crystal display device according to a second embodiment of the present invention. FIG. 19 is a cross-sectional view of the liquid crystal display device along the short-side direction. FIG. 20 is a cross-sectional view of the liquid crystal display device along the long-side direction. FIG. 21 is a plan view illustrating locations of a hot cathode tube and a lamp clip relative to a chassis included in the liquid crystal display device. FIG. 22 is a plan view illustrating a light reflectance distribution of a diffuser plate. FIG. 23 is a magnified partial plan view of a relevant part of the diffuser plate illustrating a general configuration of a surface thereof opposite the hot cathode tube. FIGS. 24 to 27 are graphs illustrating reflectance changes with respect to a short-side direction of the diffuser plate. In FIGS. 24 to 27, the long-side direction and the short-side direction of the diffuser plate are aligned with the X-axis direction and the Y-axis direction. In FIGS. 24 and 25, the horizontal axis corresponds to the Y-axis direction (the short-side direction) and the graphs are drawn by plotting the light reflectance from the lower edge to the upper edge of the diffuser plate in FIG. 22 along the Y-axis direction. In FIGS. 26 and 27, the horizontal axis corresponds to the X-axis direction (the long-side direction) and the graphs are drawn by plotting the light reflectance from the left edge to the right edge of the diffuser plate in FIG. 22 along the Y-axis direction.

As illustrated in FIGS. 18 to 20, each cold cathode tube 40 includes a glass tube having an elongated tubular shape and a pair of electrodes. The glass tube is a hollow glass tube with ends thereof sealed. The electrodes are enclosed within the glass tube and located at the respective end portion of the glass tube. Mercury and noble gas are enclosed within the glass tube and a fluorescent material is applied to the inner wall of the glass tube. Relay connectors 41 are arranged at the respective ends of the cold cathode tube 40. Lead terminals projects from the respective electrodes to the outside of the glass tube. The relay connectors 41 are connected to the respective lead terminals. The cold cathode tube 40 is connected to the inverter board set 26 mounted to the outer surface of the bottom plate 14a of the chassis 14 via the relay connectors 41. Driving of the cold cathode tube 40 can be controlled. The cold cathode tube 40 has a luminous portion LP and non-luminous portions NLP. The luminous portion LP is located inner than the electrodes with respect to the axial direction. In the luminous portion LP, a predetermined light-emitting condition can be achieved. In the non-luminous portions NLP, the electrodes are arranged, respectively, and the predetermined light-emitting condition cannot be achieved. The outer diameter of the cold cathode tube 40 is about 4 mm, which is smaller than that of the hot cathode tube 17 in the first embodiment (e.g., about 15.5 mm).

Six of the cold cathode tubes 40 having the above configuration area housed in the chassis 14. They are arranged parallel to each other at predetermined intervals (line pitch) in a certain area inside the chassis 14. As illustrated in FIGS. 18 to 21, the bottom plate 14a of the chassis 14 (opposite the diffuser plate 130) has a first edge area 14A, a second edge area 14B, and a middle area 14C. The first edge area 14A is located close to one of edges of the short dimension of the bottom plate 14a. The second edge area 14B is located close to the other edge. The middle area 14C is located between the first edge area 14A and the second edge area 14B. The cold cathode tubes 40 are arranged in the middle area 14C of the bottom plate 14a. A light-source installed area LA is located in this area. The light-source installed area LA of this embodiment is larger than that of the first embodiment. The cold cathode tubes 40 are not arranged in the first edge area 14A and the second edge area 14B of the bottom plate 14a. Light-source non-installed areas are located in these areas. The cold cathode tubes 40 are arranged only in the middle area of the bottom plate 14a of the chassis 14 with respect to the short-side direction and thus the light-source installed area LA is created in the middle area. The light-source installed area LA is larger than each light-source non-installed area LN. A percentage of the light-source installed area LA (or the length measures in the Y-axis direction) in the overall area of the screen (the height (or the short dimension) of the screen) is higher in comparison to the first embodiment. The percentage is about 24%. The light-source non-installed areas LN are substantially the same. Each cold cathode tube 40 has a length substantially equal to the width (or the long dimension) of the screen.

As illustrated in FIGS. 19 to 21, lamp clips 120 are arranged parallel to each other inside the chassis 14. The lamp clips 20 are arranged in lines, three of them are in each line along the Y-axis direction (in an arrangement direction of the cold cathode tubes 40). Two lines of the lamp clips 12 are arranged separately from each other in the X-axis direction. Six lamp clips 120 are arranged in a matrix. The luminous portion LP of each cold cathode tube 40 is held by the lamp clips 120 at two positions separated from each other in the X-axis direction.

Amain body 120a of each lamp clip 120 has a rectangular plan-view shape with a long dimension aligned with the Y-axis direction (the arrangement direction of the cold cathode tubes 40 or the lamp clips 120). Lamp grippers 120b are arranged at respective end portions of the long dimension of the main body 120a. The arrangement direction of the lamp grippers 120b is aligned with the Y-axis direction, and a line pitch thereof is substantially same as the line pitch of the cold cathode tubes 40. A pair of the lamp grippers 120b of each lamp clip 120 can hold a different (or adjacent) cold cathode tube 40 from (or to) the cold cathode tube 40 held by the other pair of the lamp grippers 120b of the lamp clip 120.

A distribution of light reflectance at the diffuser plate 130 is as follows. As illustrated in FIGS. 22 to 24, the light reflectance at the diffuser plate 130 gradually decreases from the center of the short dimension thereof toward each end of the short dimension thereof, namely, the distribution thereof is a normal distribution (showing a bell curve). The light reflectance of the diffuser plate 130 is the highest at the center of the short dimension thereof and the lowest (e.g., about 30%) at each end of the short dimension. The highest light reflectance is about 40%, which is lower than that of the diffuser plate 30 of the first embodiment. The lowest light reflectance is about 30%. Areas of the diffuser plate 130 have the light reflectance higher than the light reflectance calculated by adding the lowest light reflectance to a half of the light reflectance calculated by subtracting the lowest light reflectance from the highest light reflectance (e.g., about 35%). These areas do not include the low-light-reflectance area LR, which will be explained. These areas are half-value width areas HW. The percentage of the half-value width with respect to the short dimension of the diffuser plate 30 is about 70%, which is higher in comparison to the diffuser plate 30 of the first embodiment. About 70% of the entire area of the diffuser plate 130 around the center of the short dimension thereof is the half-value width area HW. About 15% of the area of the diffuser plate 130 in each edge portion of the diffuser plate 130 with respect to the short-side direction is an area outside the half-value width area HW. The half-value width area HW includes the light-source installed area LA and predetermined-width areas adjacent to the light source installed area LA. The distribution of the light reflectance of the diffuser plate 130 is gentler in comparison to the distribution of the light reflectance of the diffuser plate 30 of the first embodiment (see FIG. 8).

As illustrated in FIGS. 23, 25 and 27, an area of the diffuser plate 130 overlapping the lamp clip 120 in plan view (the light-source-holding-member overlapping area) includes a low-light-reflectance area LR in which the light reflectance is locally reduced. The low-light-reflectance LR includes an area overlapping the lamp gripper 120b in plan view (the light-source-holding-member overlapping area). Specifically, the low-light-reflectance area LR has an X dimension smaller than the main body 120a and substantially equal to the lamp gripper 120b or slightly larger than the lamp gripper 120b. The low-light-reflectance area LR has a Y dimension corresponding to an area covering three lamp clips 120 arranged parallel to each other. Namely, the low-light-reflectance area LR correctively covers three lamp clips 120 arranged along the Y-axis direction. The low-light-reflectance area LR has an oval plan-view shape. The Y dimension of the low-light-reflectance area LR is substantially equal to the Y dimension of the light-source installed area LA of the chassis 14. A pair of the low-light-reflectance areas LR is provided. The low-light-reflectance areas LR are separated from each other in the X-axis direction so as to correspond to the lines of the lamp clips 120 arranged along the Y-axis direction, each line including three lamp clips 120. The dots 132a of the light reflector 132 are not provided in the low-light-reflectance area LR of the diffuser plate 130. Therefore, the light reflectance at the low-light-reflectance area LR is about 30%, which is lower than the light reflectance at the peripheral area ALR (about 37%, see FIGS. 25 and 26).

As described above, the backlight unit 12 includes a plurality of the cold cathode tubes 40 as linear light sources. In the backlight unit 12, the diffuser plate 130 has the low-light-reflectance area LR in the area overlapping the lamp clip 120 in plan view. With this configuration, the amount of light passing through the low-light-reflectance area LR is less likely to differ from the amount of light transmitting through the peripheral area ALR. Therefore, the distribution of the intensity of light exiting the diffuser plate 130 can be evened.

Six (i.e., a plurality of) cold cathode tubes 40 are arranged inside the chassis 14. Two sets of (i.e., a plurality of) the lamp grippers 120b are arranged along the arrangement direction of the cold cathode tubes 40. With this configuration, a single lamp clip 120 can hold two (a plurality of) cold cathode tubes 40.

Six (a plurality of) cold cathode tubes 40 are arranged inside the chassis 14. Three (a plurality of) lamp clips 120 are arranged in each line along the arrangement direction of the cold cathode tubes 40 inside the chassis 14. The low-light-reflectance area LR is formed in the area where three (a plurality of) lamp clips 120 are arranged. In comparison to low-light-reflectance areas formed separately for respective lamp clips, the low-light-reflectance area LR can be easily formed in a process of manufacturing the diffuser plate 130.

The linear light sources are the cold cathode tubes 40. With the cold cathode tubes 40, a life of the backlight unit 12 can be extended and light modulation can be easily performed.

### <Other Embodiments>

The embodiments of the present invention have been described, however, the present invention is not limited to the above embodiments explained in the above description and the drawings. The following embodiments may be included in the technical scope of the present invention, for example.
(1) In the first embodiment, the low-light-reflectance area of the diffuser plate is lightly larger than the area (the light-source-gripper overlapping area) overlapping the lamp gripper of the lamp clip (the light-source gripper) and smaller than the area (light-source-holding-member overlapping area) overlapping the entire part of the lamp clip (light-source holding member). However, the size of the low-light-reflectance area can be altered as appropriate as long as at least a part thereof is included in the light-source-holding-member overlapping area). For example, the low-light-reflectance area can be same as the light-source-holding-member overlapping area. Alternatively, the low-light-reflectance area can be same as the light-source-gripper overlapping area. The low-light-reflectance area may be provided only in an area overlapping a part of the light-source gripper holding the linearly formed light source exposed to the front side (the holding protrusions and the guides in the above embodiments). Namely, the low-light-reflectance area may be provided only in the light-source-gripper overlapping area excluding the area overlapping the luminous portion of the linearly formed light source. Furthermore, the low-light-reflectance area can be provided in an area including a part of the light-source-gripper overlapping area. Still furthermore, the low-light-reflectance area can be provided in an area including a part of the light-source-gripper overlapping area and an external area of the light-source-gripper overlapping area. The low-light-reflectance area may be provided in an area including an entire area of the light-source-holding-member overlapping area and an external area of the light-source-holding-member overlapping area.

(2) In the first modification of the first embodiment, the light reflectance is substantially constant in the low-light-reflectance area. However, the light reflectance may be varied in the low-light-reflectance area. For example, the light reflectance may decrease gradually or stepwise as a distance from the center of the low-light-reflectance area increases, or increases gradually or stepwise.

(3) The configuration of the diffuser in the first to the third modification of the first embodiment can be applied to the diffuser plate of the second embodiment.

(4) In the second embodiment, the low-light-reflectance area is provided in the area where three lamp clips are arranged along the Y-axis direction (all lamp clips). However, the low-light-reflectance area is not limited to the area where all clips are arranged. For example, separate low-light-reflectance areas may be provided independently in an area where two lamp clips are arranged and in an area where one lamp clip is arranged. Alternatively, low-light-reflectance areas may be formed separately for respective areas where respective lamp clips are arranged such that the low-light-reflectance areas are separated and independent from one another.

(5) The number or locations of the lamp clips arranged relative to the chassis can be altered from those in the above embodiments as appropriate. As a modification of the first embodiment, more than one lamp clips may be arranged parallel to each other along the X-axis direction. As a modification of the second embodiment, more than two lines of lamp clips along the Y-axis direction may be arranged along the X-axis direction. The number of clips arranged along the Y-axis direction may be changed to two or more than three. The lamp clips may be arranged in a staggered layout (in a zigzag layout) inside the chassis. As a modification of the second embodiment, the number of lines of the lamp clips arranged along the Y-axis direction may be changed to one.

(6) The plan-view shape of the low-light-reflectance area can be altered from that in the above embodiments as appropriate. The low-light-reflectance area and the lamp gripper (or the lamp clips) may have the same plan-view shape, or different plan-view shapes.

(7) The shapes of the main body and the lamp gripper of each lamp clip may be altered from those in the above embodiments as appropriate. As a modification of the lamp clip in the second embodiment, three or more lamp grippers may be provided on the main body.

(8) In the above embodiments, pushpin type stoppers are used as mounting structures of the lamp clips to the chassis. However, slide-type mounting structures may be used. The slide-type mounting structures include hook-shaped stoppers. A main body of each lamp clip is pushed against the bottom plate of the chassis and slid along the bottom plate. The hook-shaped stopper is held to an edge of a mounting hole.

(9) In the above embodiments, each lamp clip has the stopper as a mounting structure to the chassis. However, the lamp clip may not have the stopper. In such a case, an adhesive layer may be provided between the main body and the bottom plate of the chassis or the light reflecting sheet. With the adhesive layer, the lamp clip is mounted to the chassis.

(10) In the above embodiments, each lamp clip has the white surface. However, the surface of the lamp clip may be in opalescent white or silver. The surface of the lamp clip may be colored by applying paint in desired color.

(11) The percentage of the half-value width of the light reflectance of the diffuser plate with respect to the short dimension can be altered as appropriate. The preferred percentage is in a range from 25% to 80%. The highest light reflectance and the lowest light reflectance of the diffuser plate can be altered as appropriate. Furthermore, the light reflectance in the low-light-reflectance area can be altered as appropriate.

(12) In the above embodiments, each dot in the dot pattern of the light reflector has a round shape. However, the shape of the dot is not limited to the round shape. Any shape such as oval shape and polygonal shape can be selected.

(13) In the above embodiments, the light reflector is formed by printing the dots on the surface of the diffuser plate. However, other methods including metal evaporation can be used.

(14) In the above embodiments, the in-plane light reflectance of the diffuser plate is adjusted by the light reflector formed on the surface of the diffuser plate. However, the light reflectance of the diffuser plate can be adjusted as follows. A diffuser plate generally has a configuration including a transparent substrate with light-scattering particles scattered therein. The light reflectance of the diffuser plate can be defined by a percentage of the light-scattering particles in the transparent substrate (i.e., a percentage by weight). Namely, the light reflectance can be set relatively high by setting the percentage of the light-scattering particles relatively high and relatively low by setting the percentage of the light-scattering particles relatively low.

(15) In the above embodiments, the light reflectance of the diffuser plate is set or controlled by changing the areas of the dots of the light reflector. However, the light reflectance can be controlled by changing intervals between dots having the same area, or by dots having different light reflectances. The dots having the different light reflectances can be formed with materials having different light reflectances.

(16) In the above embodiments, the light reflector is provided on the diffuser plate of the optical member and the light reflectance thereof is adjusted as appropriate. However, the light reflector may be provided on a component of the optical member other than the diffuser plate and the light reflectance thereof is adjusted as appropriate. The number and the kinds of the diffuser plate and the optical sheets of the optical member can be altered as appropriate.

(17) In the first embodiment, a single hot cathode tube is used as a light source. However, the number of the hot cathode tube can be altered as appropriate. Two ore more hot cathode tubes can be used. When two hot cathode tubes are used, a preferred percentage of the light-source installed area with respect to the height of the screen is about 37%. When three or more hot cathode tubes are used. The percentage of the light-source installed areas may be adjusted proportional to the number of the hot cathode tubes. When two or more hot cathode tubes are used, lamp clips each having a main body and a plurality of lamp grippers as in the second embodiment may be used.

(18) In the second embodiment, six cold cathode tubes are uses as light sources. However, the number of the cold cathode tubes can be altered. Five or less cold cathode tubes can be used. Alternatively, seven or more cold cathode tubes can be used. When four cold cathode tubes are used, a preferred percentage of the light-source installed area with respect to the height of the screen is about 26%. When eight cold cathode tubes are used, a preferred percentage of the light-source installed area with respect to the height of the screen is about 58% . When other number of the cold cathode tubes is used, the percentage of the light-source installed area may be adjusted proportional to the number of the cold cathode tubes.

(19) In the above embodiments, the middle area of the chassis is the light-source installed area. The first edge areas and the second edge area of the chassis are light-source non-installed areas. However, at least one of the first edge area and the second edge area may be used as the light-source installed area and the other areas are used as the light-source non-installed areas.

(20) In the above embodiments, the light source is arranged in a certain area of the chassis (i.e., the light-source installed area and the light-source non-installed areas are provided). However, the light sources may be evenly arranged in an entire area of the chassis. In such a case, the light reflectance at the diffuser plate may be substantially constant in the entire area but an area corresponding to the lamp clip may be configured as a low-light-reflectance area.

(21) In the above embodiments, the hot cathode tube or the cold cathode tubes, which are one kind of fluorescent tubes, are used as linear light sources. However, other kinds of fluorescent tubes may be used. Discharge tubes other than the fluorescent tubes (e.g., mercury lamps) may be used.

(22) In the above embodiments, one kind of linear light sources is used. However, multiple kinds of linear light sources may be used. For example, both hot cathode tube and cold cathode tube may be used.

(23) The screen size or the aspect ratio of the screen can be altered from those in the embodiments as appropriate.

(24) The liquid crystal display device in the above embodiments is a portrait type such that the liquid crystal panel and the chassis are orientated with the short-side directions thereof aligned with the vertical direction. However, a portrait type liquid crystal display device with a long-side direction of a liquid crystal panel and a chassis aligned with the vertical direction.

(25) In the above embodiments, the TFTs are used as switching components of the liquid crystal display device. However, the technology described herein can be applied to liquid crystal display devices using switching components other than TFTs (e.g., thin film diodes (TFDs)). Furthermore, it can be applied to white-and-black liquid crystal display devices other than the color liquid crystal display device.

(26) In the above embodiments, the liquid crystal display device including the liquid crystal panel as a display panel is used. However, the present invention can be applied to display devices including other types of display panels.

(27) In the above embodiments, the television receiver including the tuner is used. However, the technology can be applied to a display device without the tuner.

### EXPLANATION OF SYMBOLS

10: Liquid crystal display device (Display device), 11: Liquid crystal panel (Display panel), 12: Backlight device (Lighting device), 14: Chassis, 14b: Opening, 14A: First edge area, 14B: Second edge area, 14C: Middle area, 15: Optical member, 17: Hot cathode tube (Linearly formed light source), 20: Lamp clip (Light-source holding member), 20b: Lamp gripper (Light-source gripper), 30: Diffuser plate (Optical member), 31: Optical sheet (Optical member), 32: Light reflector, 32a Dot, 40: Cold cathode tube (Light source), ALR: Peripheral area, DA: Light-source overlapping area (Area overlapping the light-source installed area), DN: Light-source non-overlapping area (Area overlapping the light-source non-installed area), LA: Light-source installed area, LN: Light-source non-installed area, LP: Luminous portion, LR: Low-light-reflectance area, TV: Television receiver.

## Claims

1. A lighting device comprising:
a linearly formed light source;
a chassis housing the light source and having an opening for light from the light source to pass through;
an optical member provided so as to face the light source and to cover the opening;
a light-source holding member holding a luminous portion of the linearly formed light source,
wherein the optical member has an area overlapping the light-source holding member including a low-light-reflectance area, light reflectance of which at at least a surface facing the linearly formed light source is relatively lower than a peripheral area.

2. The lighting device according to claim 1, wherein the chassis has a part facing the optical member, the part including a light-source installed area in which the linearly formed light source is arranged and a light-source non-installed area in which the linearly formed light source is not arranged.

3. The lighting device according to claim 2, wherein:
the part of the chassis includes at least a first edge area, a second edge area, and a middle area, the second edge area being located at an edge portion opposite from the first edge area, the middle area being located between the first edge area and the second edge area;
the middle area is the light-source installed area; and
each of the first edge area and the second edge area is the light-source non-installed area.

4. The lighting device according to claim 3, wherein:
the optical member has a part that overlaps the light-source installed area and a part that overlaps the light-source non-installed area, both having surfaces facing the linearly formed light source;
the part that overlaps the light-source installed area excluding the low-light-reflectance area has light reflectance at at least the surface thereof higher than light reflectance at at least the surface of the part that overlaps the light-source non-installed area.

5. The lighting device according to claim 4, wherein the light reflectance at at least the surface of the part of the optical member facing the linearly formed light source decreases as a distance from the linearly formed light source increases except in the low-light-reflectance area.

6. The lighting device according to any one of claims 1 to 5, further comprising a light reflector configured to reflect light and formed on a surface of the optical member facing the linearly formed light source.

7. The lighting device according to claim 6, wherein the light reflector is provided in areas of the optical member other than the low-light-reflectance area.

8. The lighting device according to claim 6, wherein the light reflector is provided in the low-light-reflectance area in addition to the areas of the optical member other than the low-light-reflectance area and.

9. The lighting device according to any one of claims 1 to 8, wherein the light-source holding member includes a main body extending along the chassis, and a light-source gripper projecting from the main body on the linearly-formed-light-source side and holding the linearly formed light source.

10. The lighting device according to claim 9, wherein the low-light-reflectance area includes the area of the optical member overlapping the light-source gripper.

11. The lighting device according to one of claims 9 and 10, wherein:
the linearly formed light source includes a plurality of linearly formed light sources arranged inside the chassis; and
the light-source gripper is arranged on the main body along an arrangement direction of the linearly formed light sources.

12. The lighting device according to one of claims 9 to 11, wherein:
the linearly formed light source includes a plurality of linearly formed light sources arranged inside the chassis;
the light-source holding member includes a plurality of light-source holding members arranged along an arrangement direction of the linearly formed light sources inside the chassis; and
the low-light-reflectance area is formed in an area in which the plurality of the light-source holding members are arranged.

13. A display device comprising:
the lighting device according to any one of claims 1 to 12; and
a display panel configured to provide display using light from the lighting device.

14. The display device according to claim 13, wherein the display panel is a liquid crystal display panel with liquid crystal sealed between substrates provided in a pair.

15. A television receiver comprising the display device according to any one of claims 13 and 14.
